(19) **Europäisches Patentamt**
**European Patent Office**
**Office européen des brevets**

(11) **EP 0 999 935 B1**

(12) **EUROPEAN PATENT SPECIFICATION**

(45) Date of publication and mention
of the grant of the patent:
**05.11.2003 Bulletin 2003/45**

(51) Int Cl.⁷: **B41J 2/05**, G06K 15/10,
B41J 29/393

(21) Application number: **98939165.1**

(22) Date of filing: **31.07.1998**

(86) International application number:
**PCT/US98/16101**

(87) International publication number:
**WO 99/008875 (25.02.1999 Gazette 1999/08)**

(54) **INK JET PRINTER, METHOD AND SYSTEM COMPENSATING FOR NONFUNCTIONAL PRINT ELEMENTS**

TINTENSTRAHLDRUCKER, VERFAHREN UND SYSTEM MIT KOMPENSATION FÜR NICHT FUNKTIONIERENDE DRUCKELEMENTE

IMPRIMANTE A JET D'ENCRE, ET PROCEDE ET SYSTEME PERMETTANT DE COMPENSER LE NON-FONCTIONNEMENT DE CERTAINS ELEMENTS D'IMPRESSION

(84) Designated Contracting States:
**DE FR GB**

(30) Priority: **01.08.1997 US 55080 P**

(43) Date of publication of application:
**17.05.2000 Bulletin 2000/20**

(73) Proprietor: **ENCAD, INC.**
**San Diego, CA 92121-3734 (US)**

(72) Inventors:
• **NEESE, David**
  **Escondido, CA 92029 (US)**
• **FREE, Warren**
  **Anaheim, Ca 92807 (US)**
• **HOANG, Loan, M.**
  **Poway, CA 92064 (US)**

(74) Representative: **Barker, Brenda et al**
**Kodak Limited**
**Patent Department**
**Headstone Drive**
**Harrow, Middlesex HA1 4TY (GB)**

(56) References cited:
**EP-A- 0 394 699**        **EP-A- 0 694 396**
**EP-A- 0 855 270**        **EP-A- 0 863 004**
**WO-A-96/32263**          **WO-A-98/40222**
**US-A- 5 124 720**

• **PATENT ABSTRACTS OF JAPAN vol. 096, no. 002, 29 February 1996 & JP 07 285225 A (NEC CORP), 31 October 1995**
• **PATENT ABSTRACTS OF JAPAN vol. 012, no. 289 (M-728), 8 August 1988 & JP 63 067164 A (MITSUBISHI ELECTRIC CORP), 25 March 1988**
• **PATENT ABSTRACTS OF JAPAN vol. 016, no. 062 (M-1211), 17 February 1992 & JP 03 256755 A (TOSHIBA CORP), 15 November 1991**

**Description**

Field of the Invention

The invention relates to multi-pass ink-jet printing. More particularly, the invention relates to a method and system for detecting one or more failed ink jets and thereafter compensating for the one or more failed ink jets with the remaining operational ink jets.

Description of the Related Technology

Multi-pass printing is a technique used to reduce banding in ink-jet printing. Dots of ink, when still in liquid form, tend to run together due to surface tension. This is referred to as coalescence. To print a high quality image it is important to print individual round dots. But to achieve full saturated colors, the dots must overlap to completely cover the paper. By only printing a portion of the image data so as to avoid simultaneously printing adjacent dots during each printing cycle, coalescence may be largely avoided. Additionally, by avoiding all horizontal adjacencies, the transverse speed of the printing mechanism can be increased up to two times the rated print speed of the printhead.

Multi-pass printing is accomplished by filtering the image data using a print mask to determine which dots are to be printed in each swath. A swath is defined as a region, or portion, of a recording medium which is printed upon by a given portion, or print zone, of a printhead cartridge having a specified number of ink jets, as the printhead cartridge passes over the recording medium. The swath successively advances through each print zone after each pass of the printhead and is partially printed in each print zone. The printing of a swath is completed after it has successively advanced through each print zone.

In multi-pass printing, each jet of a printhead is assigned the role of ejecting ink, as necessary, onto prespecified areas or "dots" on a raster line which is currently in the jet's respective print zone. However, a jet sometimes fails either due to being clogged or electrical problems in its firing circuitry. When this occurs, the prespecified areas which are assigned to the failed jet in accordance with a respective jet mask, are not printed upon. Therefore, if one or more jets fail and there are many areas in which intended ink drops are not deposited, the quality of the printed image may significantly suffer.

Prior art methods have dealt with this problem by utilizing auxiliary jets in the printhead which are assigned the task of replacing failed jets. However, this method is inefficient because these auxiliary jets are inactive during periods when there are no jet failures. Therefore, the auxiliary jets represent printhead resources which are not fully utilized to their maximum potential. Additionally, in order to safeguard against situations in which multiple jets simultaneously fail, not just one but a bank of multiple auxiliary jets are set aside in the printhead for taking the place of failed jets. Although printheads having multiple auxiliary printheads improve the reliability and quality of the images produced by the printer, these printheads are more costly, larger and, therefore, require more space in a printer than those printheads without auxiliary jets.

EP-A-0 863 004, which is a document falling under Art. 54(B) EPC, discloses a multi-pass printer wherein a malfunctioning ink ejection element is replaced by a replacement ink ejection element.

A basic premise of ink jet printers is that all ink jets must "fire" properly (i.e., eject ink droplets) or the quality of the present image may be degraded. The detection of nonfunctional ink jets, otherwise referred to herein as "open jet detection," is a method of determining which jets within a printhead cartridge are electrically nonfunctional. This electrical non-functionality can result from open traces, damaged drop ejection resistors, changed resistance values, or poor contact between the cartridge and a "flex circuit" which provides control signals to the cartridge. All of these errors may cause one or more jets of a printhead cartridge to not fire, or fire improperly, resulting in anomalies in the printed image.

Defective jets can also result from clogged jet nozzles. Current open jet detection methods are unable to electronically detect clogged jets that are still electrically correct. However, by executing a prime printing pattern using a printhead cartridge under test, and observing the printed results, a user may identify clogged jets and manually input the address or reference designation of each clogged jet into a list of defective or nonfunctional jets. The list of defective or nonfunctional jets, otherwise referred to herein as the "open jet list," is a record of all nonfunctional jets in the respective printhead cartridge. By updating the open jet list, a user of the ink jet printer may be notified as to when a printhead cartridge has an unacceptable number of nonfunctional jets. Additionally, prior art methods utilized this open jet list to compensate for the nonfunctional ink jets with one or more auxiliary jets in the printhead cartridge.

A common way of measuring current in a circuit is to measure the voltage across a resistor in series with the circuit. Prior art methods of detecting nonfunctional jets have utilized this concept to measure current through printhead circuitry as one or more jets in a printhead cartridge are fired. For example, assume that each of four cartridges has four sets of 14 jets. Firing all the jets requires a sequence of 14 separate firings for the 14 jets in each set. During testing, only one jet in each set of jets is turned on at any instant in time. There is a resistor in series with each set of jets for each cartridge for a total of 16 series resistors. The voltage drop across a series resistor is due to a single jet firing. However, if no jet in that set is firing, the voltage drop will be zero. The voltage drop across each of the series resistors is typically connected through a diode to a common point and compared to a reference voltage. The output from the comparison is an indication of whether a jet is properly functioning. By firing each jet one at a time, it can be determined whether each one has electrical continuity.

The above-described method becomes less desirable as the number of jets and, hence, the number of sets of jets, increases, necessitating an increase in the number of series resistors. These series resistors waste energy, generate heat, waste board space and cost money. The prior art method also has limited functionality in that it only indicates that the current through a jet was greater than or less than some predetermined threshold. This type of indication does not distinguish between the different types of problems which may cause an ink jet to misfire, or not fire at all. For example, the prior art method cannot distinguish between a shorted power line, a shorted address line, or a damaged drop ejection resistor in an ink jet printhead.

Summary of the Invention

The invention provides an ink jet printer and a method of compensating for nonfunctional ink jets in an ink jet printer according to claims 1, 3 and 11. Dependent claims 2, 4-10 and 12-16 define further advantageous embodiments. In accordance with the invention a multi-pass printing compensation scheme is provided which detects nonfunctional ink jets in a jet group and utilizes any remaining jets of the jet group to compensate for the one or more failed jets in that jet group, without the utilization of otherwise idle auxiliary jets. The method and printer of the invention accomplishes this task by assigning new replacement jet masks to the remaining jets of the jet group such that all areas, or dots, on a respective raster line are accounted for. Furthermore, these replacement jet masks avoid forming horizontally and vertically adjacent dots during a single pass of the printhead over the recording medium.

Brief Description of the Drawings

Figure 1 is a block diagram of the components of an ink jet printer system.

Figure 2 illustrates a portion of a print mask for a 104 jet printhead having six print zones corresponding to a six-pass multi-pass printing configuration.

Figure 3 illustrates six jet masks corresponding to jet group # 2 of the print mask of Figure 2, each jet mask corresponding to a respective jet and a respective print zone.

Figure 4 illustrates the dots on the raster line which are printed in each print zone in accordance with the six jet masks of jet group # 2 of Figure 3, as the raster line on the recording medium is successively advanced through each print zone.

Figure 5 illustrates the printing configuration of successive swaths of a recording medium as the recording medium successively passes through the six print zones of the printhead of Figure 2 when using the print mask of Figure 2.

Figure 6 illustrates a first replacement jet group mask for a jet group which has one defective jet, in accordance with one embodiment of the invention.

Figure 7 illustrates a second replacement jet group mask for a first jet group which has two defective jets, in accordance with one embodiment of the invention.

Figure 8 illustrates a third replacement jet group mask for a jet group which has three defective jets, in accordance with one embodiment of the invention.

Figure 9 illustrates a fourth replacement jet group mask for a jet group which has four defective jets, in accordance with one embodiment of the invention.

Figure 10 illustrates the correlation between each of the six print zones and each replacement jet mask of the first replacement jet group mask of Figure 5.

Figure 11 illustrates a portion of a print mask when jet 12 in jet group 12 is determined to be non-functional and jet group mask 12 has been replaced by the first replacement jet group mask of Figure 6.

Figure 12 illustrates the printing configuration of successive swaths of a recording medium as the recording medium successively passes through the six print zones of the printhead of Figure 2 when using the print mask of Figure 11.

Figure 13 illustrates identical replacement jet masks assigned to adjacent jets within each print zone.

Figure 14 illustrates the first replacement jet group mask of Figure 6, having its individual jet masks rotated in a round robin fashion to be utilized on a second jet group, adjacent to the first jet group.

Figure 15 illustrates the first replacement jet group mask of Figure 6 assigned to a first jet group and the rotated version of the first replacement jet group mask as shown in Figure 14, assigned to a second jet group, adjacent the first jet group, in accordance with one embodiment of the invention.

Figure 16 illustrates a schematic diagram of a circuit, coupled to an ink jet printer cartridge, which is used to determine if one or more ink jets in the cartridge is nonfunctional.

Figure 17 illustrates an ink jet matrix which exemplifies the relationship between each ink jet in an ink jet cartridge and their corresponding power lines and address lines.

Figure 18 is a response curve which illustrates a decrease in voltage level across an output capacitor as the capacitor discharges.

Detailed Description of the Preferred Embodiment

The invention is described in detail below with reference to the figures.

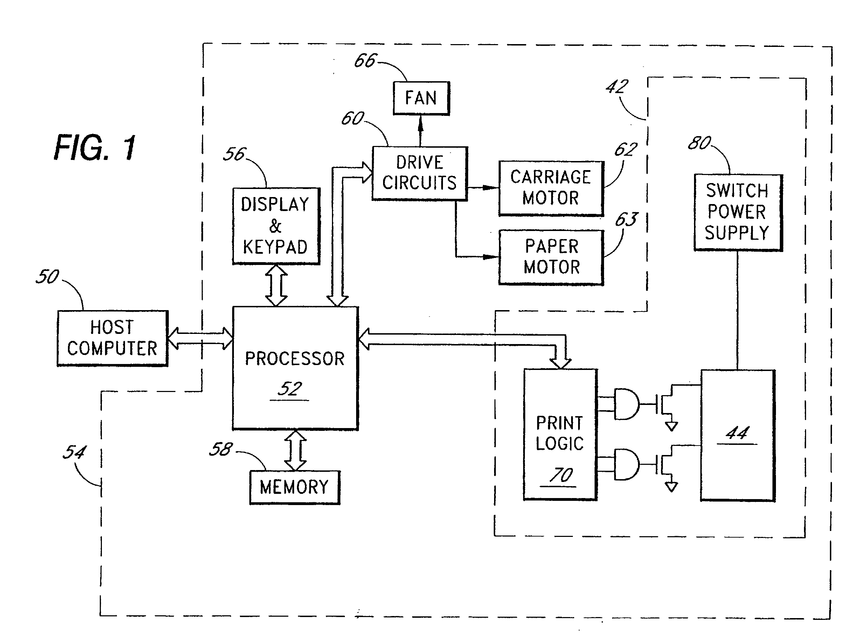

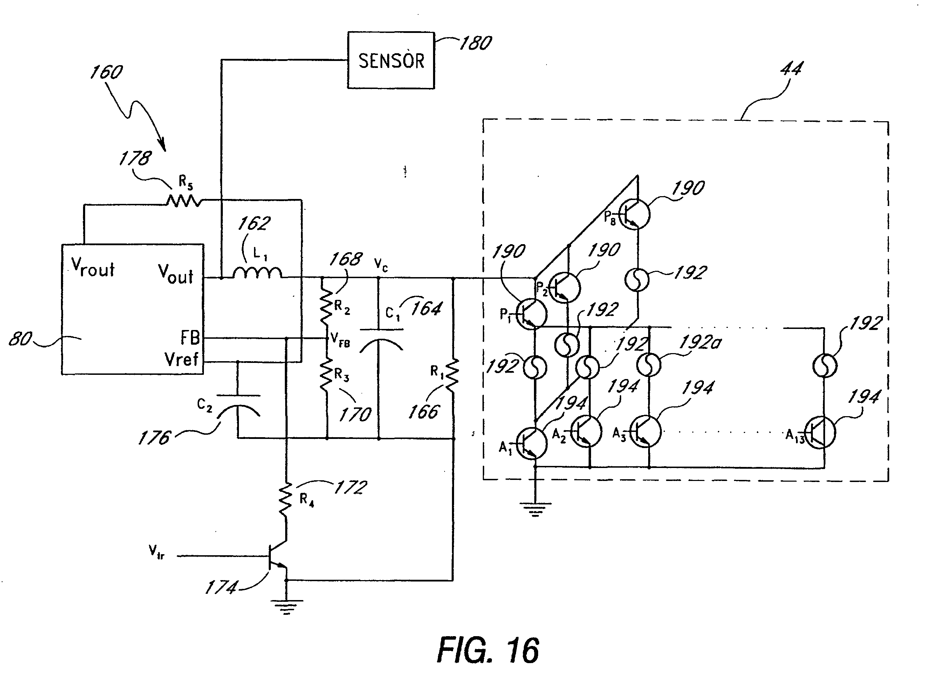

Referring to Figure 1, various components of a typical ink jet printer 54 are illustrated. These various components include the control electronics inside the ink jet printer 54 which are used to control ink droplet ejection from the ink jets of a printhead cartridge 44 of a printhead carriage 42. A host computer 50 communicates with a processor 52 integral with the ink jet printer 54. The host computer 50 runs driver software which issues print commands and sends data to the ink jet printer. As in conventional ink jet printers, the processor 52 communicates with a display and keypad 56, memory 58, and drive circuits 60 which control the print carriage motor 62 and paper motor 63 as well as powering a fan 66. In addition, the processor 52 routes signals to print logic 70, which actuates the ink jets of each printhead cartridge 44 located within the printhead 42. The ink jet printer 54 further includes a switching power supply 80, coupled to the printhead cartridge 44 of the printhead carriage 42, which provides power to fire each individual ink jet of the cartridge 44. The system comprising the switching power supply 80 and the printhead cartridge 44, coupled to the output of the power supply 80, is described in further detail below with reference to Figure 16.

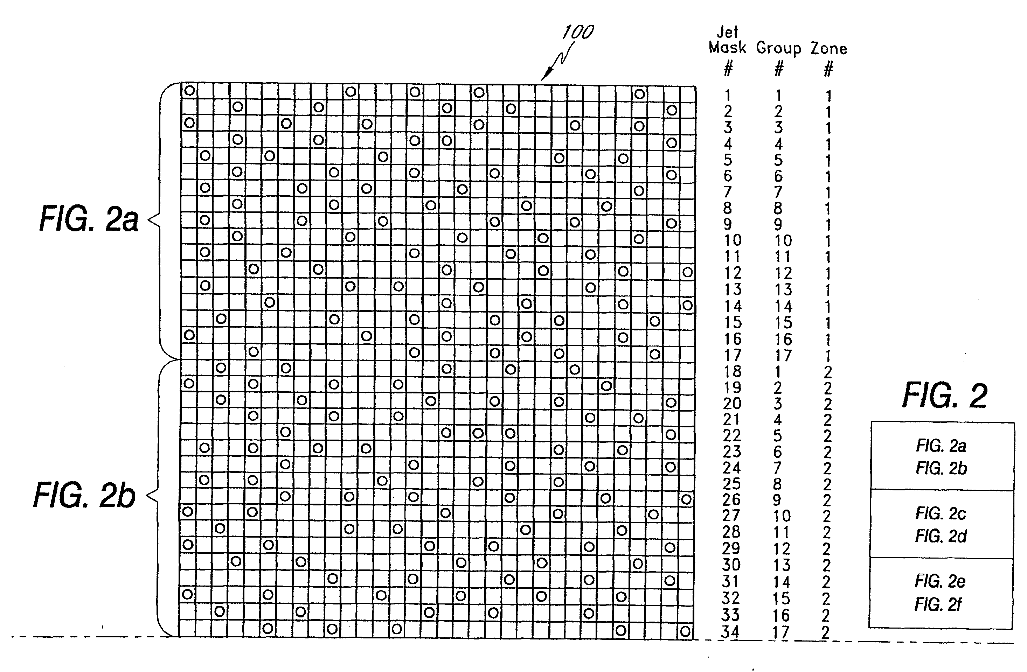

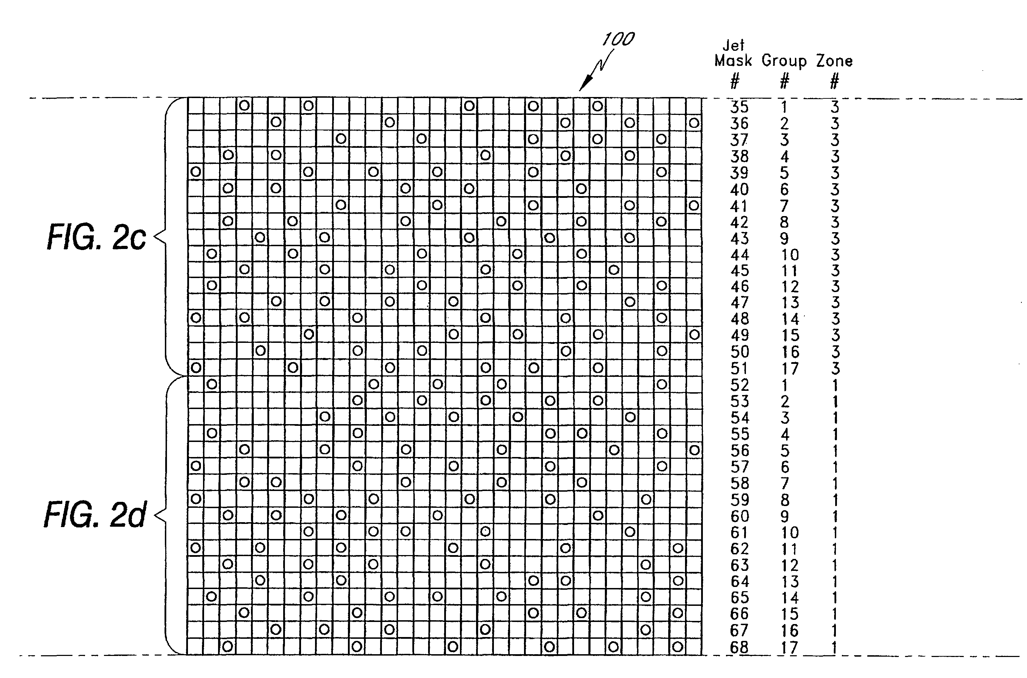

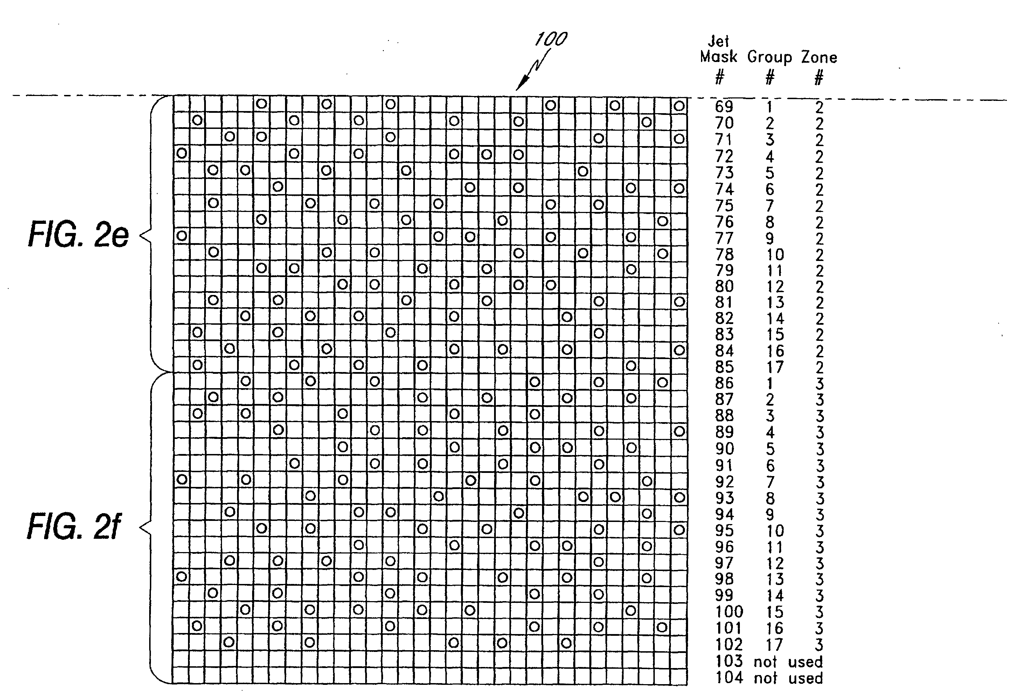

The processor 52, in accordance with internal firmware stored in a portion of the memory 58, selectively ejects ink droplets from the ink jets of each cartridge 44. The programming of the processor thus determines which ink jet of the printhead cartridge 44 is assigned to be used to eject an ink droplet onto any given grid location of the printed image when the relevant swath being printed calls for a droplet at that given grid location. In multi-pass printing, for example, the set of nozzle to grid location assignments is commonly referred to as a print mask, and the print mask definition is stored in memory 58 in the ink jet printer 54. The function and operation of a print mask is described in further detail below with reference to Figures 2·145.

Referring to Figure 2, one example of a print mask 100 having six print zones 102a-f, and 17 individual jet masks 104 within each print zone 102a-f (for a total of 102 individual jet masks 104), is illustrated. A separate print mask 100 is defined for each print-mode (number of passes) supported by the device and is used, unchanged, throughout the processing and printing of an image. The print mask 100 is made up of the individual jet masks 104 that determine the dots fired by each jet of a printhead. These individual jet masks 104 are configured such that adjacent jets on the printhead do not print horizontally or vertically adjacent dots during a single pass of the printhead across the recording medium. As described above, by avoiding horizontal and vertical adjacencies, printing anomalies and distortions caused by the coalescence of adjacent dots are substantially reduced.

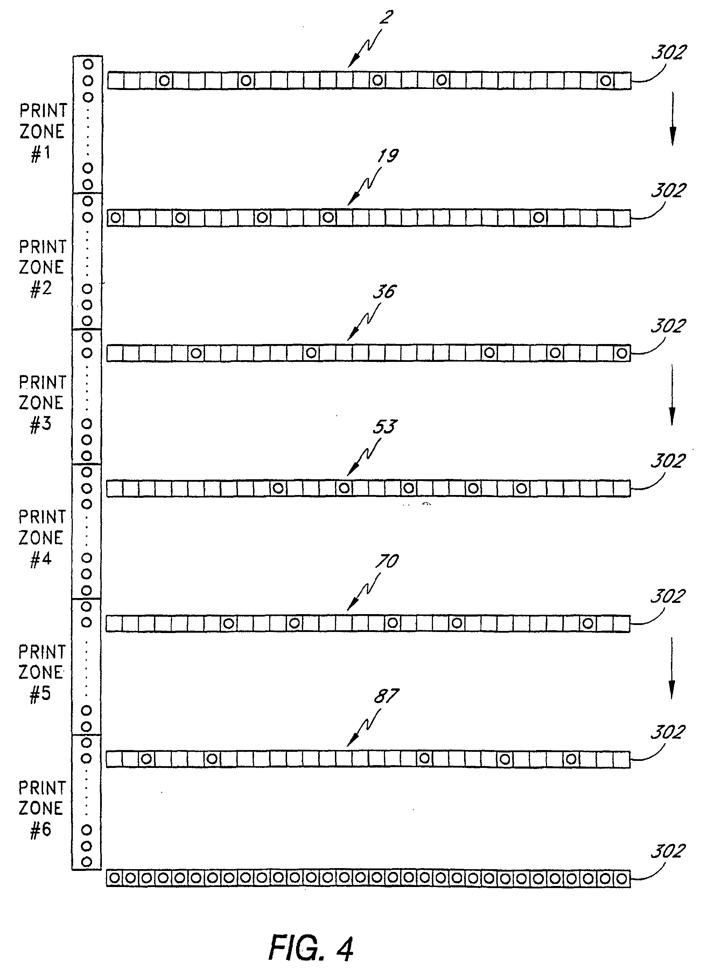

As shown in Figure 2, the individual jet masks 104 are arranged into zones 102a-f that correspond to the number of passes for which that print mask was designed. A set of jets having one jet from each zone makes up a complementary jet group. Jet masks for each jet in a jet group make up a jet group mask. For example, jet mask no. 's 2, 19, 36, 53, 70 and 87 make up jet group mask no. 2. Figure 4 illustrates one embodiment of jet group mask no. 2 which includes the six jet masks 2, 19, 36, 53, 70 and 87. These six jet masks 2, 19, 36, 53, 70 and 87 correspond to the six print zones 1, 2, 3, 4, 5 and 6, respectively.

During printing, each print zone 102a-f prints a swath of the recording medium. Referring again to Figure 2, a swath may be defined as the set of seventeen vertically adjacent raster lines on the recording medium within each respective print zone. However, it is understood that the invention is not limited by any specific number of raster lines in a swath or jet masks in a given print zone. Different embodiments are envisioned which contain different numbers of raster lines per swath and/or jet masks per print zone.

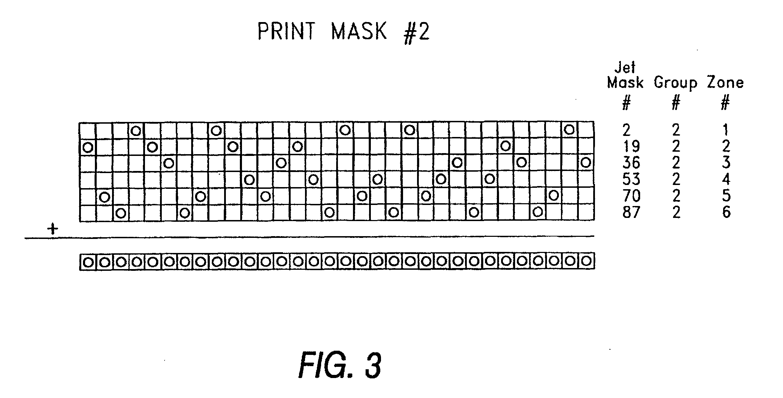

Referring to Figure 4, each jet mask 2, 19, 36, 53, 70 and 87 of the jet group mask of Figure 3 is illustrated within its corresponding print zone 1-6. Each raster line in a swath is printed by a single jet group with the work being shared between the members of that jet group. For example, during a first pass of the printhead over the recording medium, a swath of the recording medium is in print zone #1 and the second jet of the printhead belonging to jet group 2, prints dots on a corresponding second raster line 302 of the swath in accordance with jet mask 2 of Figure 3. Figure 4 further illustrates the allocation of dots on a single raster line 302 in accordance with jet masks 2, 19, 36, 53, 70 and 87 of jet group mask 2, as the single raster line 302 advances through each print zone 1-6. As shown in Figure 4, jet mask 2 indicates which dots on the second raster line that jet 2 is responsible for printing. If the image requires ink to be printed on a dot for which the second jet is responsible for, this dot is printed during the first pass of the printhead over the swath when it is in print zone 1.

After printing the swath in print zone 1, the recording media is advanced by an amount equal to the size of one zone such that the swath is now in print zone 2. When the swath is in print zone 2, the second raster line 302 is aligned with a jet of the printhead which is a member of jet group 2. In print zone 2, the second raster line 302, which has been partially printed upon by the second jet when it was in print zone 1, is now printed upon, as necessary, by the nineteenth jet of the printhead during a second pass of the printhead over the recording medium. As discussed above, the nineteenth jet and its corresponding jet mask 19 is the next member of jet group 2 which is responsible for printing the second raster line 302 in the swath. Jet mask 19 allocates which dots are printed by the nineteenth jet.

After printing the swath in print zone 2, the recording media is once again advanced by an amount equal to the size of one zone such that the swath is now in print zone 3. In print zone 3, the second raster line 302 is aligned with a 36th jet of the printhead and is printed upon, as necessary, by the 36th jet in accordance with jet mask 36, during a third pass of the printhead over the recording medium.

The above-described process is repeated until the swath has been printed upon in each print zone. As shown in Figure 3, after the swath has completed the six-pass printing process and advanced through each of the six print zones, all the dots of the raster line 302 are accounted for. As used herein, the term "dot" refers to any area of any shape or size on a recording medium, which may be covered by ink by a jet.

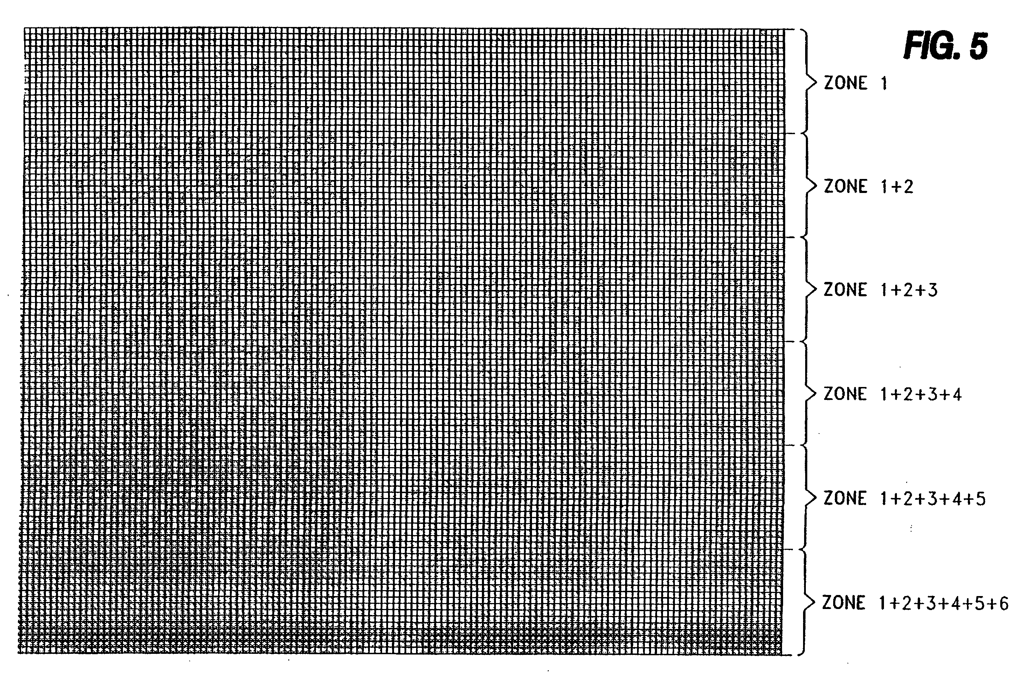

Figure 5 illustrates adjacent swaths of a recording medium which have undergone various stages of a six-pass (hence, six zone) printing process. The configuration of dots on the recording medium represents all the dots which may be printed in a given zone plus all previous zones. In the example shown, the image to be printed on the recording medium is a solid image, otherwise known as a "color fill," covering the entire printable surface area. As shown in Figure 5, each dot is within a square box which represents the area on the recording medium which is intended to be covered by the dot of ink. However, it is understood that these square boxes are illustrated merely for purposes of distinguishing the different areas or "dots" on the recording medium and are not visible on the actual recording medium. It is further understood, that the dots printed on the recording medium may have overlapping areas such that there are no spaces between adjacent dots if a solid image, or full "color-fill" is desired.

Open jet compensation is a modification to the multi-pass printing method described above, which allows for the use of information regarding defective or non-functional jets to dynamically modify the print masks of a printhead to compensate for the non-functional jets. This type of compensation scheme typically results in minimal degradation in print quality and no degradation in printing speed when there are relatively few defective jets in each jet group. Although the following discussion focuses on a printhead configured for six-pass mode printing in six print zones, and having seventeen jet groups, each jet group having one jet in each print zone, it is understood that the invention may be implemented in printers having printheads with different numbers of print zones, jet groups and jets in each jet group.

If a jet group contains defective jets, the jet masks for the entire group are replaced with a replacement jet group mask that is appropriate for the number of functional jets remaining in that group. In one embodiment, the maximum number of jets in a jet group is 6. Therefore, replacement jet group masks have been defined for 2, 3, 4 and 5 jets remaining. These replacement jet group masks take the responsibility of firing dots away from the defective jets and assigns the responsibility for printing the entire raster line to the remaining functional jets within that jet group.

Defective jets can result from open traces, damaged drop ejection resistors, changed resistance values, or poor contact between the cartridge and the "flex circuit" which provides control signals to the cartridge. As discussed above, defective jets can also result from clogged jet nozzles. All of these errors will cause a jet or jets not to fire, resulting in anomalies in the printed image. The invention may utilize any well-known method or system of detecting defective jets in ink-jet printers. After one or more jets have been determined to be non-functional, a list of the defective jets may be generated, either automatically or via manual input by an operator of the ink jet printer, and stored within a memory of the ink-jet printer. This list of defective jets may then be accessed as necessary to update the print masks of the respective printhead cartridge. In one embodiment, the above-described improved method and system for detecting nonfunctional elements in a printhead is utilized to detect nonfunctional ink jets and compensate for the non-functional ink jets with one or more remaining functional ink jets. This novel detection method and system is described in greater detail below with reference to Figures 16-18.

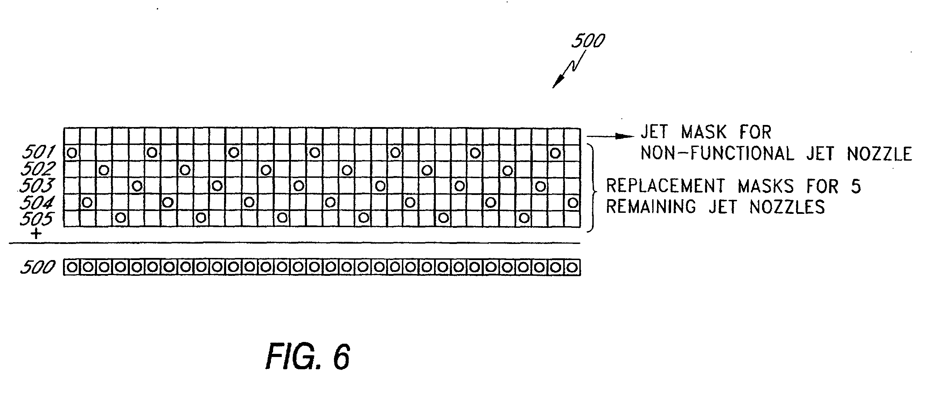

Referring to Figure 6, assuming that one jet in a jet group has been determined to be non-functional, a first replacement jet group mask 500 replaces the original jet group mask of that jet group in order to allocate printing of the entire raster line to the five remaining, functional jets of the jet group. The first replacement jet group mask 500 includes individual replacement jet masks 501-505. When one of six jets in a jet group fails, that jet is shut off, or completely masked, and the original jet masks for the remaining five functional jets of that jet group are replaced by the replacement jet masks 501-505.

For example, if a first jet corresponding to the first print zone has been determined to be non-functional, the first jet in the first print zone is simply turned off, or completely masked, such that it emits no ink, and replacement jet masks 501-505 are assigned to the remaining jets of that jet group. In one embodiment, the replacement jet masks 501-505 are assigned to the remaining jets such that replacement jet masks 501-505 are assigned to the remaining functional jets for that jet group by order of ascending print zone numbers for each remaining functional jet. If the jet corresponding to print zone 1 has failed, then the first functional jet, by order of ascending print zones, is the jet in print zone 2 for that respective jet group. Therefore, replacement mask 501 is assigned to that jet in print zone 2. Similarly, the replacement mask 502 is assigned to the jet in print zone 3 for that respective jet group, and replacement mask 503 is assigned to the jet in print zone 4, and so on.

However, if the non-functional jet was determined to be in print zone 3, for example, the first functional jet would be that corresponding to print zone 1. Therefore, replacement mask 501 would be assigned to the respective jet for that jet group in print zone 1, replacement mask 502 would be assigned to the respective jet in print zone 2, and replacement mask 503 would be assigned to the respective jet in print zone 4, and so on.

As shown in Figure 6, by replacing the original jet group mask with the first replacement jet group mask 500, when a jet of a jet group is determined to be non-functional, the responsibility of compensating for the non-functional jet is allocated among the remaining functional jets. In this way, a complete raster line 506, having no dots unaccounted for, may still be produced by that jet group.

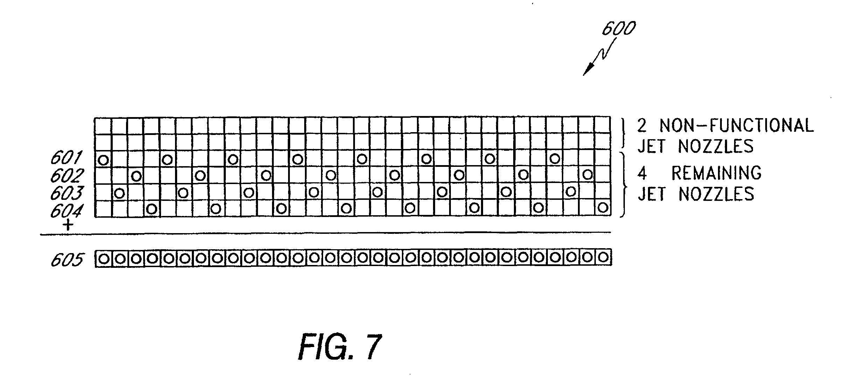

Referring to Figure 7, a second replacement jet group mask 600 for a jet group having two non-functional jets is illustrated. The second set of replacement masks 600 includes replacement masks 601-604 each corresponding to one of the four remaining jets for that jet group. Similar to the allocation scheme described above with reference to Figure 6, the replacement masks 601-604 are allocated to the remaining functional jets by order of ascending print zone numbers. For example, if a jet group has non-functional jets in print zones 1 and 4, the first functional jet would be that in print zone 2. Therefore, replacement mask 601 would be assigned to that jet in print zone 2, replacement mask 602 would be assigned to the corresponding jet in print zone 3, replacement mask 603 would be assigned to the corresponding jet in print zone 5 and replacement mask 604 would be assigned to the corresponding jet in print zone 6. As shown in Figure 7, the replacement masks 601-604 allow the four remaining functional jets of a jet group having two non-functional jets to print a complete raster line 605, having no dots unaccounted for.

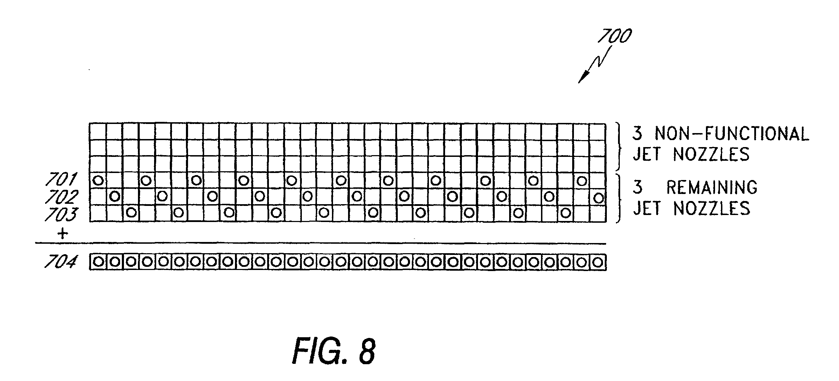

Figure 8 illustrates a third replacement jet group mask 700 for a jet group having three non-functional jets. The third set of replacement masks 700 includes replacement masks 701-703, which are allocated to the three remaining functional jets of a jet group determined to have three non-functional jets. In one embodiment, the replacement masks 701-703 are assigned to the remaining jets by order of ascending print zone numbers, as discussed above with reference to Figures 6 and 7. As shown in Figure 8, the replacement masks 701-703 allow the remaining jets of a jet group, having three non-functional jets, to print a complete raster line 704, with no dots unaccounted for.

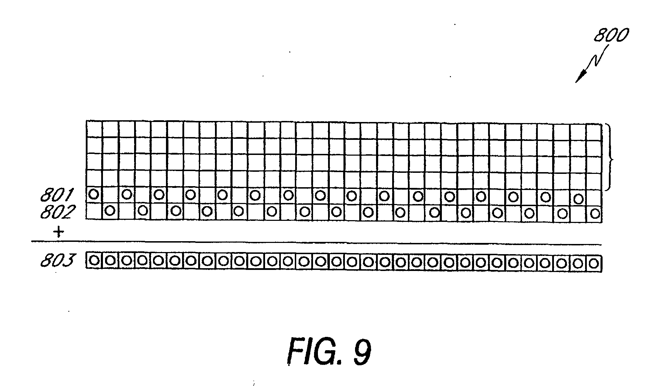

Figure 9 illustrates a fourth set of replacement masks 800 for a jet group having four non-functional jets. The fourth set of replacement masks 800 includes replacement masks 801 and 802, which are allocated to the two remaining functional jets of a jet group determined to have four non-functional jets. In one embodiment, the replacement masks 801 and 802 are assigned to the remaining jets by order of ascending print zone numbers, as discussed above with reference to Figures 6, 7 and 8. As shown in Figure 9, the replacement masks 801 and 802 allow the remaining jets of a jet group, having four non-functional jets, to print a complete raster line 803, with no dots unaccounted for.

In order minimize coalescence and to maintain full speed printing, horizontally adjacent dots are avoided in the design of all the replacement jet masks. For this reason, at least two jets in each jet group should remain functional for the above-described replacement scheme to avoid the simultaneous printing of horizontally adjacent dots. As described above, the simultaneous printing of adjacent dots often results in coalescence and a degradation in printing quality. Therefore, in one embodiment, if there are less than two functioning jets in any jet group, the operator is instructed to use a print mode with more passes or to replace the print cartridge.

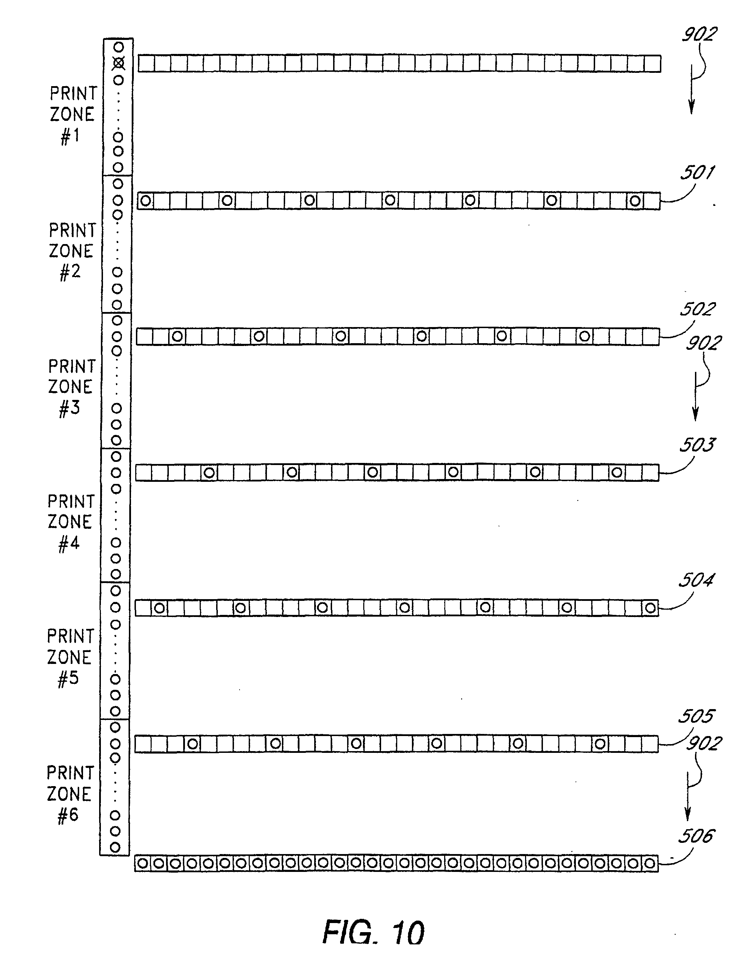

Figure 10 illustrates the replacement masks 501-505 of the first replacement jet group mask 500 assigned to the remaining jets of a jet group having one non-functional jet, each remaining jet being in a respective print zone. As shown in Figure 9, the defective, or non-functional, jet is located in print zone 1. Therefore, the jet in print zone 1 is completely masked, or turned off, such that no dots are fired onto a respective raster line of a recording medium in print zone 1. As the recording medium (e.g., a sheet of paper) advances under the printhead in the direction of arrows 902, the raster line advances to the next print zone and the next jet in the respective jet group may print dots on the raster line in accordance with the replacement jet mask 501. As the recording medium continues to advance in the direction of the arrows 902, the raster line successively passes through each of the print zones and the successive jets of the respective jet group print dots on the raster line in accordance with their respective replacement masks 501-505. After the raster line has passed through each of the respective print zones, each dot, or designated printing area, on the raster line is accounted for, as shown by the completed raster line 506.

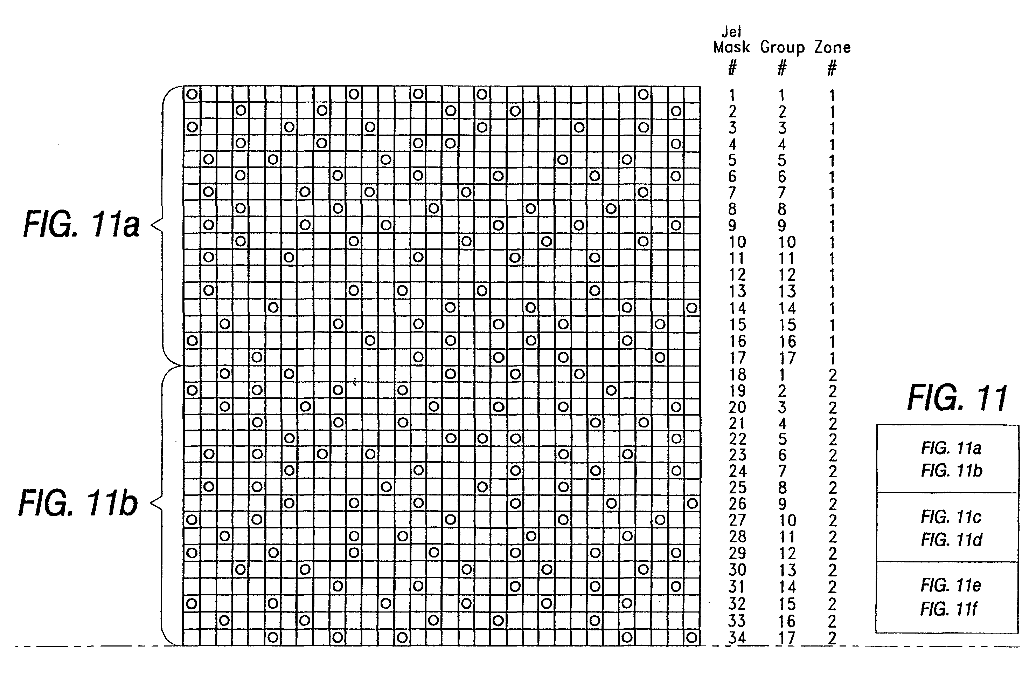

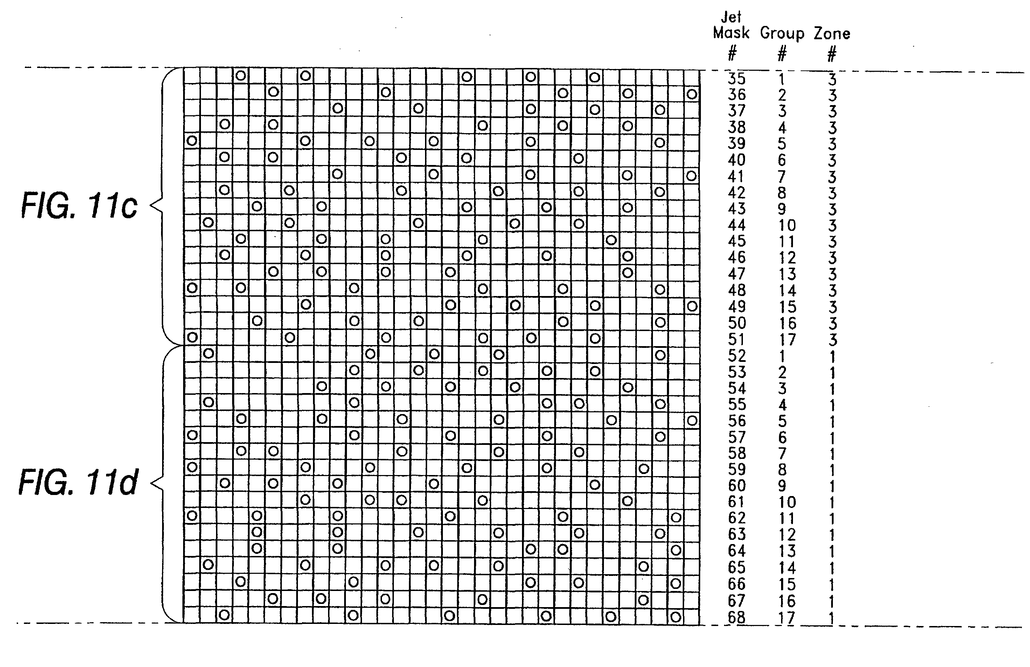

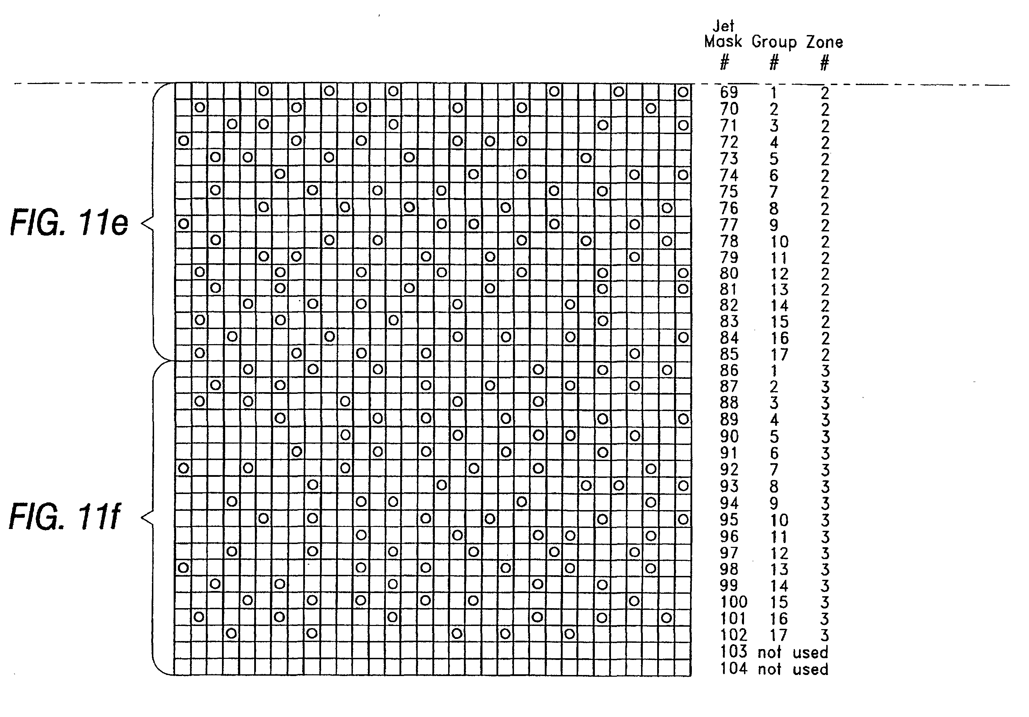

Figure 11 shows a portion of a print mask having the first replacement jet group mask 500 of Figure 6 assigned to jet group 12 because jet 12 of jet group 12 has been determined to be non-functional. Note that jet 12, in print zone 1, of jet group 12, is completely masked and, therefore, not responsible for printing any dots on its respective raster line. The remaining jets 29, 46, 63, 80 and 97 of jet group 12 have been assigned replacement masks 501, 502, 503, 504 and 505 (Fig. 6), respectively, so as to compensate for the non-functional jet 12.

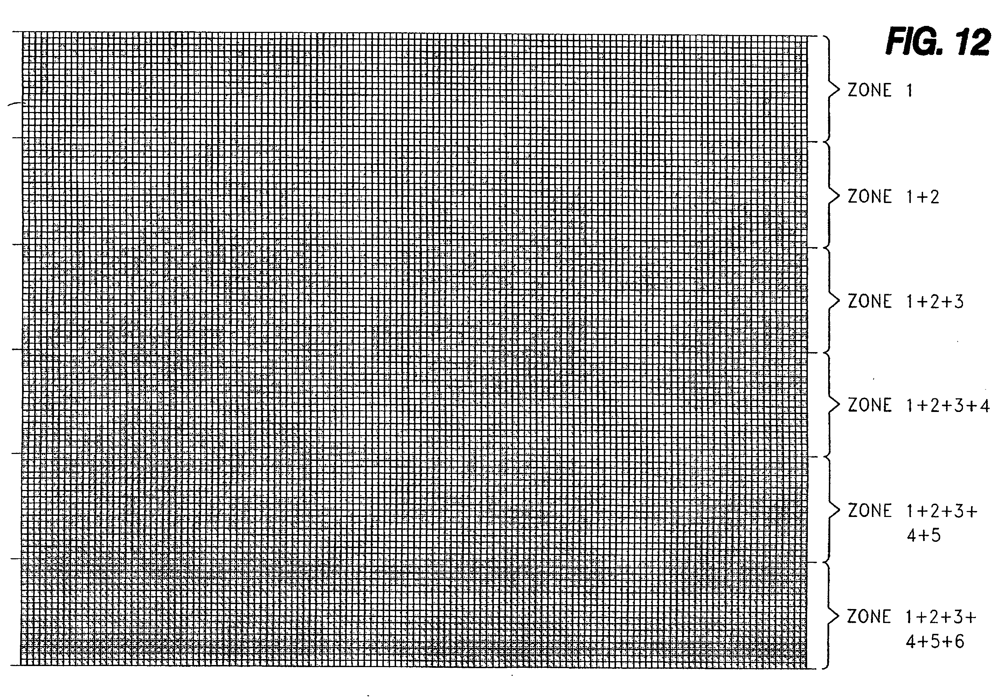

Figure 12 illustrates adjacent swaths of a recording medium which have completed one or more stages of a six-zone printing process, with the first replacement jet group mask 500 of Figure 6 assigned to jet group 12. Note that raster line 12, corresponding to the non-functional jet 12, in print zone 1, does not have any dots printed on it. However, as this raster line advances through each of the successive stages, it will be completely "filled in" with dots. As shown in Figure 12, after raster line 12 has completed printing in print zone 6, all of the dots of the raster line are filled in.

In Figure 12, the configuration of dots on the recording medium represents all the dots which may be printed in a given print zone plus all previous print zones. In other words, in the example shown, the image to be printed on the recording medium is a solid block of ink covering the entire printable surface area, otherwise referred to as a color fill. As shown in Figure 12, each dot is within a square box which represents the area on the recording medium which is intended to be covered by the dot of ink. However, these square boxes are illustrated merely for the purpose of distinguishing the different areas on the recording medium and are not necessarily visible on the actual recording medium. Furthermore, the dots printed on the recording medium may have overlapping areas such that there are no spaces between adjacent dots if a solid image is desired.

For a given number of non-functional jets in a jet group, the same set of replacement masks, corresponding to that number of non-functional jets, is used regardless of which jet in the jet group is identified as defective. As shown in Figure 11, when replacement masks are applied to the overall default print mask for the entire printhead, some vertical adjacencies will occur. The occurrence of these vertical adjacencies is infrequent and results in minimal quality degradation.

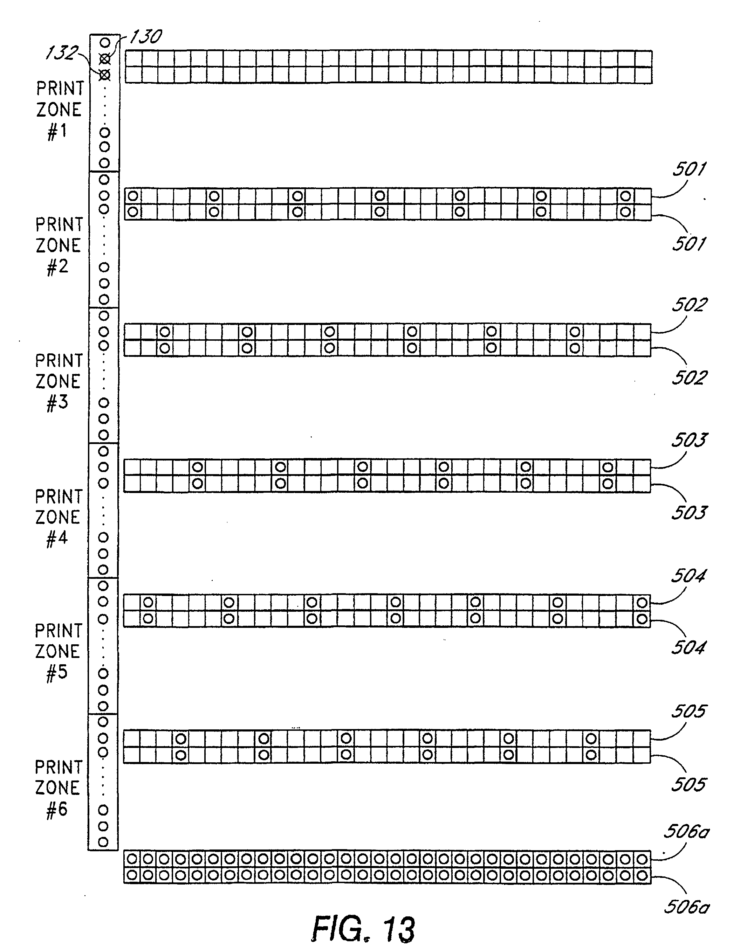

However, if jets, in adjacent jet groups, are identified as defective, identical replacement jet masks would be used for adjacent jets in print zones which contain the remaining functional jets of each of the adjacent jet groups. Figure 13 illustrates the use of identical replacement jet masks for adjacent jet groups each having one defective jet. The first set of replacement jet masks 500 of Figure 6 is used for each of the adjacent jet groups. As shown in Figure 13, adjacent remaining functional jets for both jet groups would produce a significant number of vertically adjacent dots within each print zone. This results in a significant increase in coalescence and, consequently, significant print quality degradation.

In order to avoid using identical replacement masks for adjacent jets in a print zone, a rotation scheme is used for the placement of the replacement masks. For example, if a jet fails in jet group 1, then the replacement jet masks 501-505 (Fig. 6) are successively applied to the remaining functional jets of jet group 1 in the order 501, 502, 503, 504 and 505. Each replacement mask 501-505 is assigned to its respective jet by order of ascending print zone number, as described above. If a jet also fails in jet group 2, the replacement masks 501-505 are rotated such that they are applied to the remaining functional jets of jet group 2 in the order 502, 503, 504, 505 and then 501. This rotation process is repeated each time another jet in an another adjacent jet group, e.g., jet group 3, is determined to be non-functional. The next rotation would result in the replacement masks being applied in the order 503, 504, 505, 501 and then 502.

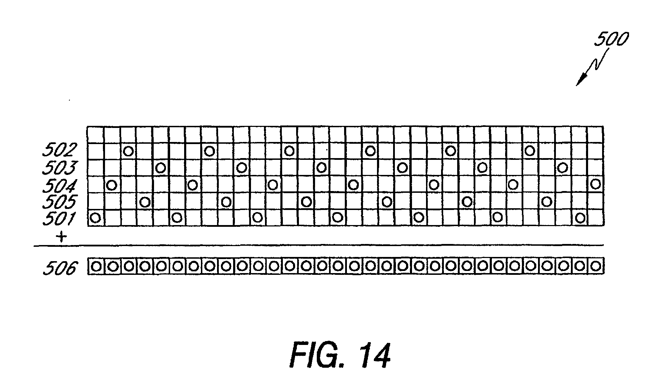

Figure 14 illustrates the first set of replacement masks 500 after its replacement masks 501-505 have been rotated once such that the order that the replacement masks 501-505 are applied to the remaining functional jets of a jet group is now 502, 503, 504, 505 and then back to 501. Note that replacement mask 502 is now the first one which is applied to the remaining functional jet in the lowest print zone, replacement mask 503 is applied to the functional jet in the next lowest print zone and so on. Replacement mask 501 is now the last replacement mask to be applied.

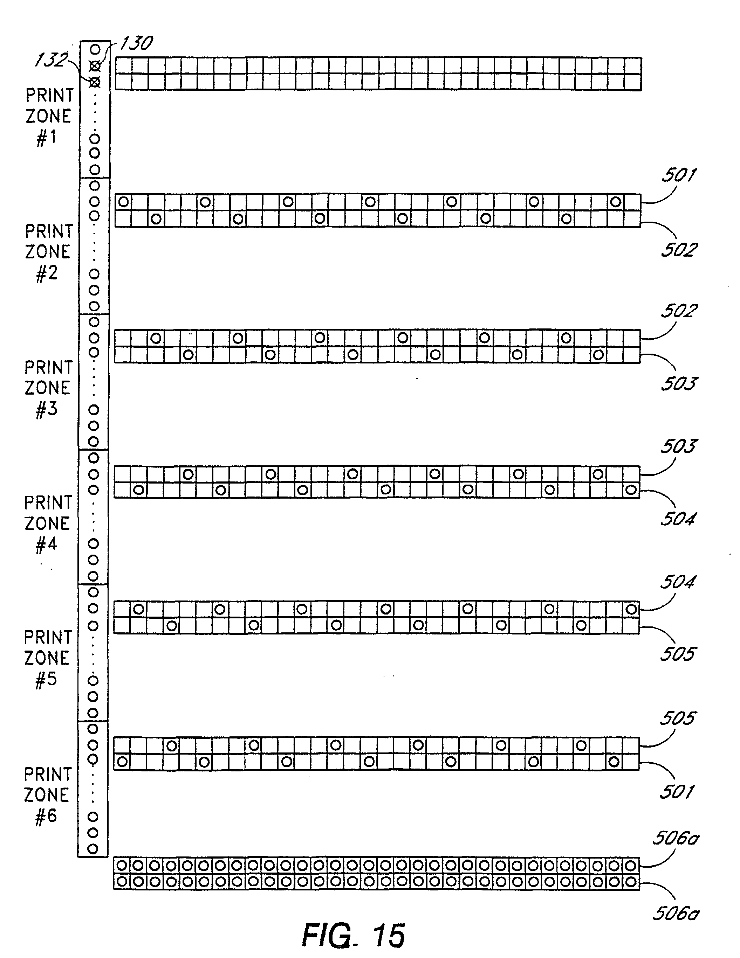

By rotating the order of the replacement masks when there are non-functional jets in adjacent jet groups, vertical adjacencies are minimized and print quality is maximized even when there are many defective jets in a print cartridge. Referring to Figure 15, a first jet 130 of a first jet group is non-functional and a second jet 132 of a second, adjacent jet group is also non-functional. The replacement jet masks 501-505 are applied to the adjacent jet groups using the rotation scheme described above. In print zone 2, replacement mask 501 is applied to a first remaining functional jet of the first jet group, while replacement mask 502 is applied to a second remaining functional jet, adjacent to the first remaining jet, of the second jet group. Thus, there are no vertical adjacencies between the dots printed by the remaining functional jets in print zone 1. Similarly, in each of the other print zones 3-6 there are no identical replacement masks for adjacent jets, and hence, no vertical adjacencies.

If new defective jets are detected in the middle of a plot, a firmware algorithm, which updates one print zone of the print mask per pass of the printhead, allows for the smooth transition to open jet compensation. Print zone 1 always prints on an unprinted swath of the recording media. Print zone 2 always overprints the region printed by zone 1 and must use jet masks that correspond to the ones used by zone 1 in the previous pass of the printhead, etc. If a new defective jet is detected in the middle of printing job, only the jet masks corresponding to print zone 1 are updated for the next pass of the printhead. After completion of that pass, the jet masks corresponding to print zone 2 are updated but the jet masks corresponding to the remaining zones are left unchanged. This process continues until all the zones have been successively updated to the new masks in order of ascending print zone numbers. In this way, a corresponding raster line which has been successfully printed in a print zone, prior to the failure of the defective jet, completes its subsequent stages in any subsequent print zones in accordance with the original jet masks for the respective jet group responsible for printing that raster line.

The following describes an improved detection method and system for detecting nonfunctional ink jets, or other elements, in an ink jet printhead, which is utilized in a preferred embodiment of the invention. However, it is understood that the invention is not limited to the below-described detection method and system but may utilize any detection method and system which is now or will be known in the art.

Referring to Figure 16, a schematic diagram of a circuit for open jet detection is illustrated. The circuit 160 includes the switching power supply 80 of Figure 1 which outputs a pulse square wave ($V_{out}$) to an inductor ($L_1$) 162, coupled to the output of the power supply 80. Coupled to the inductor ($L_1$) 162 is a capacitor ($C_1$) 164 which, together with the output inductor ($L_1$) 162 forms a low-pass filter for the output of the switching power supply 80. As shown in Figure 16, the output ($V_{out}$) of the switching power supply 80 is a pulse square wave having a period T. The low-pass filter, comprising the inductor ($L_1$) 162 and the output capacitor ($C_1$) 164, converts this output pulse square wave into a dc output voltage ($V_C$) which is stored in the output capacitor ($C_1$) 164. An output "bleed" resistor ($R_1$) 166 is coupled in parallel with the output capacitor ($C_1$) 164, and provides a slow current drain which discharges the output capacitor ($C_1$) 164 at a rate which is inversely proportional to the value of the resistance of the bleed resister ($R_1$) 166. Switching power supplies and low-pass output filters such as those described above, and their principles of operation, are well-known in the art. Therefore, a detailed discussion of the function and operation of the switching power supply 80 and the low-pass output filter, comprising the inductor ($L_1$) 162 and the capacitor ($C_1$) 164, is not provided here.

In order to regulate the output voltage $V_{out}$ of the switching power supply 80 and hence, the dc output voltage $V_C$ present on the capacitor ($C_1$) 164, a feedback circuit is coupled to a feedback port (FB) on the switching power supply 80. The feedback circuit includes a resistor divider network coupled in parallel to the capacitor ($C_1$) 164, which divides the dc output voltage ($V_C$) into a desired feedback voltage ($V_{FB}$) which is then applied to the feedback port of the switching power supply 80. The feedback network consists of a second resister ($R_2$) 168 and a third resistor ($R_3$) 170. As is well-known in the electronics arts, the magnitude of ($V_{FB}$) is related to the values of $V_C$, $R_2$ and $R_3$ by the following equation:

$$V_{FB} = V_{R1} \times [R_3 \div (R_2 + R_3)] \tag{2}$$

In order to regulate the dc output voltage ($V_C$), the feedback voltage ($V_{FB}$), which is directly proportional to the dc output voltage ($V_C$), is compared to a reference voltage ($V_{REF}$) to determine whether the output voltage ($V_C$) is within a desired voltage range. The reference voltage ($V_{REF}$) is provided by a reference capacitor ($C_2$) 176 which is connected in series with a compensation resistor ($R_5$) 178 which in turn is coupled to a reference voltage output source ($V_{ROUT}$) of the switching power supply 80. The switching power supply 80, the low-pass filter comprising ($L_1$) 162 and ($C_1$) 164, the voltage-divider resistor network comprising ($R_2$) 168 and ($R_3$) 170, and the feedback regulation scheme briefly described above, are well-known in the art and, therefore, need not be further described herein. The switching power supply 80 may be any commercially available power supply which can provide the desired regulated dc output voltage ($V_C$). In one embodiment, the desired output voltage ($V_C$) is 13.5 volts at 8 amps, and the values of the various above-described discrete components are provided in the following table:

| $L_1$ | $C_1$ | $R_1$ | $R_2$ | $R_3$ | $R_4$ | $C_2$ | $R_5$ |
|---|---|---|---|---|---|---|---|
| 10µH | 400:µF | 1KΩ | 1.65KΩ | 1KΩ | 100KΩ | 2.2µF | 30KΩ |

Coupled to the dc regulated output voltage ($V_C$) of the switching power supply 80 is the printhead cartridge 44 of Figure 1 having eight power lines $P_1$-$P_8$. Each power line $P_1$-$P_8$ is activated by a corresponding switch 190 which provides electrical connectivity between the dc output ($V_C$) of the switching power supply and a respective ink jet 192. Each of the ink jets 192 are further coupled to a respective address line $A_1$-$A_{13}$ each of which are "turned on" by a respective switch 194 which opens and closes to provide electrical connectivity between electrical ground and each of the ink jets 192. In one embodiment, each of the switches 190 and 194 corresponding to the power lines and the address lines, respectively, are bipolar NPN transistors and N-FET transistors, respectively.

As shown in Figure 16, each power line $P_1$-$P_8$ has associated therewith 13 ink jets 192. Each of the 13 ink jets 192 for each power line $P_1$-$P_8$ is coupled to a respective address line $A_1$-$A_{13}$, providing a total of 104 (8x13) ink jets 192. In order to "fire" an ink jet 192, its corresponding power line and address line must be simultaneously turned on so as to provide a conduction path from the dc regulated output voltage ($V_C$) of the power supply 80 to electrical ground, thereby closing the circuit for the respective ink jet 192. For example, if it is desired to fire ink jet 192a as shown in Figure 16, the switch 190 corresponding to power line 1 ($P_1$) must be closed as well as the switch 194 corresponding to address line 3 ($A_3$). Only then will the ink jet 192a be caused to fire. As described above, the switches 190 corresponding to the power lines $P_1$-$P_8$ and the switches 194 corresponding to the address lines $A_1$-$A_{13}$ may be bipolar NPN transistors which are activated by providing a specified current to their bases. However, other types of transistors andlor switches may be used to activate the respective power or address lines, in accordance with the invention.

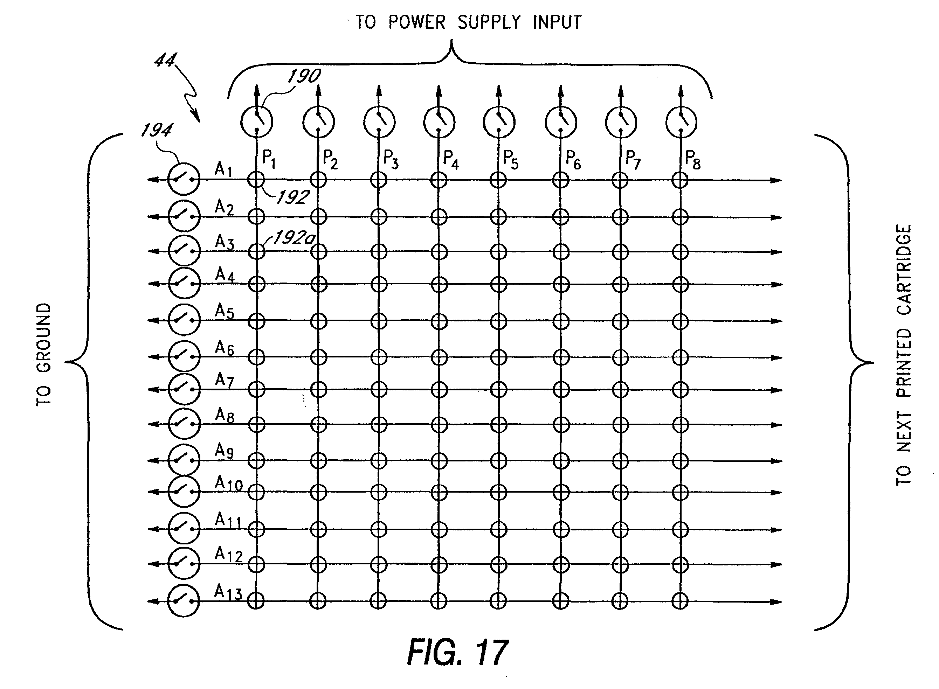

Referring to Figure 17, an ink jet matrix 44a, corresponding to the printhead cartridge 44 of Figure 16, is illustrated. The ink jet matrix 44a illustrates the relationship between each ink jet 192 and its corresponding power and address lines. Each of the power lines $P_1$-$P_8$ is turned on and off depending on whether an ink jet 192 corresponding to the respective power line is desired to be fired. Similarly, each of the address lines $A_1$-$A_{13}$ is turned on and off depending on whether an ink jet 192 corresponding to the respective address line is desired to be fired. Figure 17 further illustrates that, in order to fire ink jet 192a, for example, the switch 190 corresponding to power line $P_1$ and the switch 194 corresponding to the address line $A_3$ must both be closed so as to provide a closed electrical circuit from the dc output of the power supply to electrical ground for that particular ink jet.

Figure 17 is not an electrical circuit schematic diagram, but rather, an illustration of the correspondence between a power line and an address line for each respective ink jet 192. Furthermore, the ink jets 192 are not necessarily arranged on a printhead cartridge 44 (Figure 1) in a matrix configuration as shown in Figure 17. Nor are the ink jets 192 directly connected to adjacent ink jets 192 as suggested by Figure 17. Rather, in a preferred embodiment, each ink jet 192 is independently coupled to its respective power and address line such that the firing of one ink jet does not affect the firing of an adjacent ink jet. As shown in Figure 17, each of the power lines $P_1$-$P_8$ is coupled to the dc output of the switching power supply 80 of Figure 16. Correspondingly, each of the address lines $A_1$-$A_{13}$ is coupled to ground. In one embodiment, each printhead cartridge 44 includes its own separate and independent power lines $P_1$-$P_8$. However, the address lines $A_1$-$A_{13}$ are common to all the printhead cartridges 44 within a printhead carriage 42 (Figure 1). Therefore, as shown in Figure 17, each of the address lines $A_1$-$A_{13}$ continue on toward the next printhead cartridge 44 within the carriage 42.

Referring once again to Figure 16, the open jet compensation circuit 160 further includes a pull-down resistor ($R_4$) 172 and a pull-down switch 174, coupled in series with the pull-down resistor 172. In one embodiment, the pull-down switch 174 is a bipolar NPN transistor. As shown in Figure 16, the pull-down resistor ($R_4$) 172 and the pull-down switch 174 are coupled to the voltage-divider resistor network such that they are connected in parallel with the third resistor (R3) 170.

The regulated dc output voltage ($V_C$) may be incremented by a desired amount by closing the switch 174 and thereby pulling down the magnitude of the feedback voltage ($V_{FB}$) which is applied to the feedback port (FB) of the switching power supply 80. By turning on the transistor 174, an electrical conduction path is provided between the pull-down resistor (R4) 172 and the circuit ground, thereby effectively adding the pull-down resistor (R4) 172 in parallel with the third resistor (R3) 170 of the voltage-divider resistor network. By adding the pull-down resistor ($R_4$) 172 in parallel with the third resistor ($R_3$) 170, the effective feedback resistance ($R_{FB}$) is decreased. The value of the effective feedback resistance ($R_{FB}$) is governed by the following equation:

$$\frac{1}{R_{FB}} = \frac{(R_3 + R_4)}{(R_3 \times R_4)} \tag{3}$$

Because the feedback voltage ($V_{FB}$) is directly proportional to the effective feedback resistance ($R_{FB}$), a decrease in ($R_{FB}$) leads to a proportional decrease in ($V_{FB}$). When the feedback voltage ($V_{FB}$) is decreased by turning on the pull-down transistor 174, thereby decreasing the feedback resistance $R_{FB}$, the switching power supply 80 compensates for this decrease in feedback voltage by increasing the regulated dc output voltage ($V_C$). The switching power supply does this by increasing its "switching duty cycle," i.e., providing a longer pulse waveform to the low-pass filter comprising the output inductor (L1) 162 and the output capacitor ($C_1$) 164. The pulse square wave begins charging the output capacitor ($C_1$) 164, thereby raising the voltage level ($V_C$) across the capacitor ($C_1$) 164. The switching power supply 80 continues to provide the pulse waveform output signal to the low-pass filter until the regulated output voltage ($V_C$) is stabilized at a new higher voltage level. The output voltage ($V_C$) increases until the directly proportional feedback voltage ($V_{FB}$) reaches its previous voltage levels prior to the pull-down transistor 174 being turned on. At this point, the regulated output voltage ($V_C$) becomes stabilized at its new higher value and the switching power supply 80 temporarily ceases switching.

After the regulated dc output voltage ($V_C$) has been elevated to its new voltage level, it may then be decreased to its original voltage level by turning off the transistor 174. By turning off the transistor 174 the effective feedback resistance once again resumes its original higher value which is equal to the resistance of third resistor ($R_3$) 170. This in turn increases the feedback voltage level ($V_{FB}$) which indicates to the switching power supply 80 that the output voltage level ($V_C$) is too high. At this point, the power supply 80 is not providing a pulse waveform to the low-pass filter, and therefore, the voltage across the output capacitor ($C_1$) 164 is decreasing as current discharges from the capacitor ($C_1$) 164. When no ink jets 192 are being fired, or no power lines $P_1$-$P_8$ or address lines $A_1$-$A_{13}$ are turned on, the output capacitor ($C_1$) 164 slowly discharges through the effective output resistance, comprising the series resistors $R_2$ 168 and $R_3$ 170 of the voltage divider network, coupled in parallel with the bleed resistor ($R_1$) 166, at a rate which is proportional to the capacitance value of the output capacitor ($C_1$) 164 and inversely proportional to the effective output resistance.

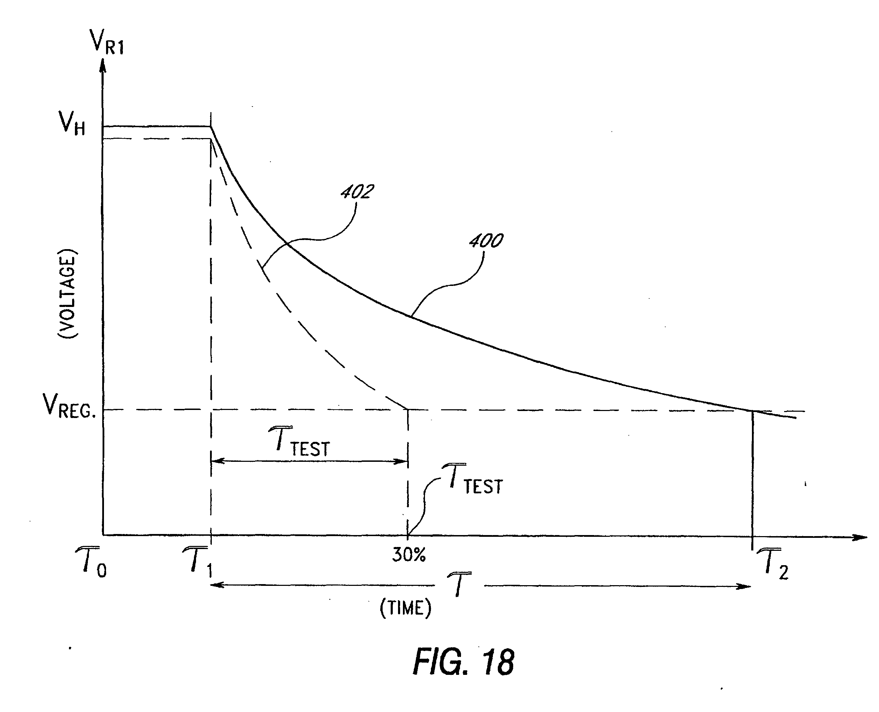

Referring to Figure 18, a voltage response curve illustrating the discharge of the output capacitor ($C_1$) 164 (Figure 16), is shown. The vertical axis of the voltage response curve indicates the magnitude of the regulated dc output voltage ($V_C$) and the horizontal axis of the response curve indicates time. At a time $t_0$ the regulated output voltage is in a stabilized, elevated state, indicated by $V_H$, and the pull-down transistor 174 (Figure 16) is turned on. At time $t_1$, the transistor 174 is turned off, thereby increasing the effective feedback resistance $R_{FB}$ to its original value of $R_3$ 170. This proportionally increases the feedback voltage level $V_{FB}$ which in turn indicates to the switching power supply 80 that the regulated output voltage $V_C$ is too high. At this point, the switching power supply 80 is not providing a pulse square wave output signal to the inductor ($L_1$) 104 and capacitor ($C_1$) 164 (Figure 16) and the switching power supply is effectively turned off.

From $t_1$ to $t_2$, the output capacitor ($C_1$) 164 discharges at a rate which is inversely proportional to the resistance at the output of the switching power supply 80. The voltage decay resulting from the discharge of the output capacitor ($C_1$) 164 when no ink jets are being fired, and no power or address lines are turned on, is indicated by the response curve 400. As discussed above, when no ink jets 192 are being fired, and no address or power lines are turned on, the effective output resistance of the switching power supply 80 is equal to ($R_1$) 166, coupled in parallel with the sum of the series resistors ($R_2$) 168 and ($R_3$) 173. However, for purposes of the following discussion, we will treat the effective output resistance as being essentially equal to the bleed resistor 166. This approximation does not change the analysis provided below. The time required for the output capacitor ($C_1$) 164 to discharge through the bleed resistor ($R_1$) 166, such that the regulated output voltage ($V_C$) decreases from ($V_H$) to ($V_{REG}$), is illustrated as r = $t_2$ - $t_1$. T is referred to herein as the reference discharge time period.

By measuring the reference discharge time period T required for the output voltage ($V_C$) to decrease from a value of $V_H$ to $V_{REG}$, a reference value which is inversely proportional to the amount of current drawn from the output of the switching power supply 80 is obtained. This output reference current ($I_{REF}$) indicates the amount of current pulled from the switching power supply 80 when no ink jets 192 are being fired, i.e., all power lines $P_1$-$P_8$ and all address lines $A_1$-$A_{13}$ are turned off. This reference discharge period is measured from the point when the pull-down transistor 174 (Fig. 16) has been turned back off at time $t_1$, after the output voltage $V_C$ has stabilized at its new higher value $V_H$, until the point in time when the switching power supply resumes switching, i.e., outputting a pulse waveform, at time $t_2$. A sensor 180 coupled to the output of the switching power supply 80 detects the pulse waveform output (Vout) of the switching power supply 80 at time $t_2$ and records the time of detection. The sensor 180 may be any one of numerous circuits which are capable of detecting a pulse waveform and which are well-known in the art.

Similar to the method of obtaining the reference discharge period described above, a test discharge period may be obtained for each of the following conditions: (1) when only a power line $P_1 \cdot P_8$ is turned on; (2) when only an address line $A_1 \cdot A_{13}$ is turned on; and (3) when a jet is turned on (i.e., its corresponding power line and address line is simultaneously turned on). In one embodiment, the above-described test discharge period $T_{test}$ is measured for each of the power lines $P_1$-$P_8$, each of the address lines $A_1 \cdot A_{13}$, and each of the ink jets 192 one at a time. For example by turning on each power line $P_1 \cdot P_3$ one at a time, without turning on any of the address lines $A_1$-$A_{13}$, each of the power lines $P_1$-$P_8$ may be individually tested. Thus, each element of a printhead cartridge 44 may be individually tested.

As discussed above, in order to fire an ink jet 190, a corresponding power line and address line must be simultaneously on to create a closed circuit which is electrically coupled between the output of the switching power supply 80 and electrical ground. Only then does the switching power supply 80 provide the desired voltage and current across the respective ink jet to be fired. Therefore, when a power line is turned on without turning on any address line, ideally, there should not be a closed circuit coupled to the output of the switching power supply 80 and, consequently, there should be no additional current draw from the capacitor ($C_1$) 164. By successively turning on each power line, one at a time, with the turning off of the pull-down transistor 174 at time $t_1$, it can be determined whether a power line, by itself, is drawing additional current from the power supply 80 when it is turned on. Since there should be no additional current draw from a single power line when no address lines are simultaneously on, the test discharge period $T_{test}$ should be equal to the reference discharge period T. However, if the test discharge period $T_{test}$ is measured to be substantially shorter than the reference discharge period $T$, this necessarily indicates that additional current is being drawn by the turning on of that respective power line. As shown in Figure 18, if the test voltage response curve 402 falls to $V_{reg}$ in an amount of time indicated by $T_{test}$ which is substantially shorter than T, the respective power line is determined to have a short circuit and/or an undesired closed circuit to electrical ground associated with that power line. In one embodiment, if the test discharge period $T_{test}$ is less than 30% of the reference discharge period $T$, the respective power line is determined to be defective, or nonfunctional.

In the circuit illustrated Figure 16, the turning on of a power line may be accomplished by providing a voltage pulse to the corresponding NPN transistor 190 for that power line. In one embodiment, the pulse for turning on a respective power line during testing of the power line has a duty cycle which is 16 times that of a pulse which is used to turn on the power line during actual firing of an ink jet during normal operation of the ink jet printer 54 (Fig. 1). As explained in further detail below, the 1/16th duty cycle of the "actual" pulse which is used to fire an ink jet 192 when compared to the "test" pulse which is used during testing of the power line, must be compensated for by dividing any measured current drawn by a power line during testing by a factor of 16. The increase in duty cycle of the test pulse allows adequate time for the output capacitor $(C_1)$ 164 to discharge by an amount proportional to dV during testing of the power lines. Additionally, the increased duty cycle allows a more accurate measurement of the characteristics of the power line.

After all the power lines $P_1$-$P_8$ have been tested, each address line $A_1$-$A_{13}$ can be tested one at a time in a similar fashion to the testing of each power line $P_1$-$P_8$ as described above. The procedure for testing an address line may be identical to the procedure for testing a power line and, therefore, need not be repeated here.

From Equation 1 above, we know that the average current pulled from the switching power supply is given by the equation $I_{average} = C \times (dV/dT)$, where C is the output capacitance value of the capacitor $(C_1)$ 164, dV is a change in voltage of the regulated dc output voltage $(V_C)$ as the capacitor 164 discharges, and dT is the time measured for the voltage change to occur. From this equation, we see that the current drawn from the output capacitor $(C_1)$ 164 is inversely proportional to the time period dT required to discharge the output capacitor $(C_1)$ 164 as the output voltage changes by an amount equal to dV. With this relationship between the current and the discharge period in mind, it is possible to calculate the average current output of the capacitor $(C_1)$ 164 by measuring the time period required for the voltage across the capacitor 164 to change from $(V_H)$ to $(V_{REG})$.

By conducting a nodal analysis at the output of the switching power supply 80 of Figure 16, the following equation is obtained:

$$I_{total} = I_{jet} + I_p + I_a + I_{ref} \tag{4}$$

where $I_{total}$ is the total amount of current drawn from the output capacitor $(C_1)$ 164 when an ink jet is fired, $I_{jet}$ is the amount of current drawn by only a single ink jet when it is fired, $I_p$ is the amount of current drawn by only a single power line when it is turned on (note that a properly functioning power line should draw negligible current), $I_a$ is the amount of current drawn by only a single address line when it is turned on (note that a properly functioning address line should draw negligible current), and $I_{ref}$ is the amount of current that is drawn by the "bleed" resistor $(R_1)$ 166.

By rewriting the above equation in terms of discharge periods which are inversely proportional to their respective currents, the following equation is obtained:

$$\frac{1}{J_m} = \frac{1}{J_a} + \frac{1}{P_a} + \frac{1}{A_a} + \frac{1}{\tau} \tag{5}$$

where $J_m$ is equal to the measured discharge period when a single ink jet is fired, $J_a$ represents the discharge period which is inversely proportional to the actual current drawn by only a single ink jet when it is fired, $P_a$ represents the discharge period which is inversely proportional to the actual current drawn by only a single power line when it is turned on, $A_a$ represents the discharge period which is inversely proportional to the actual current drawn by only a single address line when it is turned on, and $T$ is equal to the reference discharge period (Fig. 4) which is inversely proportional to the amount of current drawn by the bleed resistor 166.

Because the bleed resistor 166 continuously draws current from the capacitor $(C_1)$ 164, any measured values of current drawn by firing only a single power line, or only a single address line, or by firing an ink jet, must take into consideration the continuous current drawn by the bleed resistor 166. With this in mind, we obtain the following equation with respect to the measured current drawn from the switching power supply when only a single address line is turned on:

$$\frac{1}{A_m} = \frac{1}{A_a} + \frac{1}{\tau} \tag{6}$$

where $A_m$ represents the measured discharge period required for the capacitance voltage to change by an amount dV when only a single address line is turned on. Note that the contribution from the discharge of the capacitor $(C_1)$ 164 through the bleed resistor $(R1)$ 166 is represented by 1/T. From Equation 6, we can obtain the actual current drawn by the address line as follows:

$$\frac{1}{A_a} = \frac{1}{A_m} - \frac{1}{\tau} \tag{7}$$

Similarly, the measured current drawn when only a single power line is turned on is represented by the following equation:

$$\frac{1}{P_m} = \frac{16}{P_a} + \frac{1}{\tau} \tag{8}$$

where $P_m$ is the measured discharge period for the capacitance voltage ($V_c$) to change by an amount dV when only a single power line is turned on. As explained above, the fact that $1/P_a$ is multiplied by a factor of 16 is due to the fact that during the test mode.

The power line is turned on for a duration which is 16 times the duration that the power line is turned on when firing an ink jet during normal operation of the ink jet printer. In other words, during actual operation of the ink jet printer, an ink jet is fired by "pulsing" the power line at a duty cycle which is 1/16th of the duty cycle of the power line during testing of the printhead. From the above equation, we can obtain an equation which represents the actual current drawn by firing only a single power line during actual operation of the ink jet printer as follows:

$$\frac{1}{P_a} = \frac{1}{16P_m} - \frac{1}{16\tau} \tag{9}$$

By rearranging Equation 5 above, we obtain the following equation:

$$\frac{1}{J_a} = \frac{1}{J_m} - \frac{1}{P_a} - \frac{1}{A_a} - \frac{1}{\tau} \tag{10}$$

By plugging in the values for $1/A_a$ and $1/P_a$ obtained above, the following equation is obtained:

$$\frac{1}{J_a} = \frac{1}{J_m} + \frac{1}{16\tau} - \frac{1}{16P_m} - \frac{1}{A_m} \tag{11}$$

As explained above, $J_m$ equals the measured amount of time required to discharge the capacitor $C_1$ such that its voltage level drops by an amount equal to dV when a single ink jet is fired. $T$ represents the amount of time dT required for the voltage capacitance to decrease by an amount equal to dV when no elements of the printhead cartridge are activated. $P_m$ is the measured time period required for the capacitor to discharge by an amount equal to dV when a single power line is turned on. And finally, $A_m$ is the measured amount of time required for the capacitance to discharge by an amount equal to dV when only a single address line is turned on. By measuring each of these values individually, a value for $1/J_a$ may be obtained. As discussed above, $1/J_a$ is directly proportional to the actual amount of current which is drawn from the switching power supply by only a single ink jet when that ink jet is fired, not including any current drawn by the bleed resistor 166, nor any defective address or power lines. By obtaining the actual amount of current pulled by only a single ink jet, a determination may be made as to whether that ink jet is defective, e.g., its drop ejection resistor is damaged, irrespective of whether the power line or address line for that ink jet is in proper working order.

Thus, the invention provides a method and system in which the actual current drawn from the output capacitor ($C_1$) 164 when a single ink jet is fired (assuming that its corresponding power lines and address lines are in proper working condition) may be provided by $1/J_a$. Additionally, the amount of current drawn from output capacitor ($C_1$) 164 when only a single power line is turned on is represented by $1/P_a$. Finally, the amount of current drawn from the output capacitor ($C_1$) 164 when only a single address line is turned on may be obtained from $1/A_a$. After these values are obtained, they may be compared to threshold values or ranges in order to determine whether they fall within these threshold values or ranges. If they do not, then in one embodiment, an error message is provided by an LCD screen which is typically found on most ink jet printers today indicating either a failed power line, a failed address line, or a failed ink jet, as desired by the designer and/or manufacturer of the ink jet printer. By obtaining these values, it can be determined whether an ink jet printhead has a defective power line, or a defective address line, or whether the ink jet nozzle itself is defective. The comparison of the values $J_a$, $P_a$ and $A_a$ to the threshold values or ranges may be accomplished by any circuit which is well-known in the electronics arts.

A significant advantage of the method and system of the invention is that unlike prior art methods and systems no series current sensing element (i.e., resister), is used. Instead, the method and system of the invention measures the time it takes for capacitors supplying power to the ink jet cartridges to discharge by a small amount. In one embodiment, measurement sequence is as follows:

1. Command the output voltage of the switching power supply to shift up by dV and allow it to reach the new value. This may be accomplished by turning on the pull-down transistor 174 (Fig. 16) as described above.
2. Activate circuitry to be measured (e.g., the jet under test) or do not activate any element if a reference discharge period r is to be measured.
3. Command the output voltage of the switching power supply to shift down and start the time measurement. This may be accomplished by turning off the pull-down transistor 174, as described above. The switching power supply will not start switching until the output voltage drops to the commanded value.
4. When the switching power supply resumes switching, record the time measurement. This will be the measured discharge period which is inversely proportional to the amount of current discharged from the output capacitor $C_1$ 164.

This technique can be used to measure the quiescent state (i.e., when no elements are activated), test the printhead cartridge address lines, test the printhead cartridge power lines, test each ink jet in the test printhead cartridge, test the printhead cartridge heaters, or test any combination of these. The measurement of the quiescent state is accomplished by measuring the reference discharge period and is used as a reference point to calibrate the other measurements.

In one embodiment, the above-described measurements are conducted for each address line and each power line, and each ink jet at the startup of the ink jet printer operation. For example, each power line $P_1$-$P_8$ is successively turned on in order to measure the value of the discharge period $P_m$ for each respective power line. Similarly, each address line $A_1$-$A_{13}$ is successively turned on in order to measure the discharge period $A_m$ for each respective address line. Finally, each ink jet in a printhead cartridge is successively fired in order to measure the discharge period $J_m$ for each individual ink jet in the printhead cartridge. By obtaining the measured values for each power line, each address line, each ink jet, and the measured reference discharge period, we can obtain the values for $A_a$, $P_a$ and $J_a$ as described above. Based on these values for $J_a$, $P_a$ and $A_a$, the method and system of the present invention is capable of distinguishing between a failed power line, a failed address line, or a failed ink jet, for example. After a defective, or failed, element of the ink jet printer has been identified in this manner, appropriate actions may then be taken to repair, replace, or compensate for the damaged element.

As described above, a method and system is provided having significant advantages and features over the prior art. In accordance with the invention, if one or more ink jets in a jet group is detected as being nonfunctional the one or more nonfunctional jets may be compensated for by the remaining jets in a failed jet's respective jet group. This is accomplished by assigning replacement jet masks to the remaining functional jets within each jet group having one or more nonfunctional jets such that the remaining functional jets compensate for the failed jet(sl within their respective jet groups. This method and system does not utilize auxiliary jets which are idle during times of normal operation. Therefore, the resources of the printhead are maximized.

Furthermore, the method and system of the invention allows the multi-pass printing method to reduce or eliminate coalescence of printed dots by following a compensation scheme which avoids the printing of vertically and horizontally adjacent dots during a single pass of the printhead over the recording medium. If adjacent jets are nonfunctional, then the order of assignment of the replacement masks to the remaining functional jets of the second jet group is rotated such that adjacent functional jets do not have identical replacement masks. In this way, vertical adjacencies are minimized.

Furthermore, as described above, if one or more defective jets are detected during the printing process, the method and system of the invention successively updates the portions of the print mask corresponding to only one print zone at a time. For example, if a defective jet is detected during printing, then prior to the next pass of the printhead over the recording medium, the jet masks corresponding to print zone 1 are updated and the printhead is then allowed to make another pass over the recording medium. Prior to the next pass, the jet masks corresponding to print zone 2 are updated, and so on. In this way, if a defective or nonfunctional jet is detected during the middle of a printing job, a smooth transition from the original jet group mask to the replacement jet group masked is achieved.

Finally, as described above, the invention provides an improved open jet detection method and system in which the current required to fire an ink jet is not measured by measuring the voltage drop across a series resistor, but rather, by measuring the discharge rate of an output capacitor connected to an output of a switching power supply as one or more ink jets of the ink jet printer are fired. This eliminates the need for series resistors which dissipate heat and energy, take up space on the printhead carriages, and make the overall operation of the printhead carriage less efficient and its manufacture more costly. Additionally, by measuring the discharge rate of the output capacitor after an ink jet has been fired, or after a power line to the ink jet has been turned on, or after an address line to the ink jet has been turned on, and comparing these test discharge rates with a reference discharge rate, the invention provides a way to determine if there is a defective ink jet, a defective power line, or a defective address line, for example, and to also distinguish between these types of failures.

The invention may be embodied in other specific forms without departing from its spirit or essential characteristics. The described embodiments are to be considered in all respect only as illustrative and not restrictive. The scope of the invention is, therefore, indicated by the appended claims, rather than by the foregoing description. All changes which come within the meaning and range of the claims are to be embraced within their scope.

## Claims

1. An ink jet printer which compensates for nonfunctional ink jets in a printhead, comprising:

   a processor, coupled to a host computer, which receives print data and commands from the host computer;
   a memory, coupled to the processor, which stores at least one first print mask and at least one replacement print mask;
   a print logic circuit, coupled to the processor, which receives signals from the processor to control the operation of the printhead; and

   wherein the printhead includes a plurality of ink jets, each ink jet being assigned to print respective dots on a respective raster line of a recording medium in accordance with the at least one first print mask stored within the memory, wherein when an ink jet is detected as being defective, at least a portion of said print mask is replaced with said at least one replacement print mask also stored in the memory, wherein dots which were originally printed by said defective ink jet under the control of said first print mask are re-allocated by said replacement print mask in an approximately equal manner between two or more of the remaining ink jets of the plurality of ink jets so as to compensate for the defective ink jet.

2. The ink jet printer of Claim 1 wherein:

   said printhead includes a plurality of print zones and a plurality of ink jets in each print zone, each ink jet being assigned to print respective dots on a respective raster line of a recording medium, wherein the plurality of ink jets are divided into a plurality of jet groups, each jet group having at least one ink jet in each print zone;
   said print mask includes a plurality of jet group masks corresponding to a respective one of said plurality of jet groups, wherein each jet group mask allocates the printing of dots on a respective raster line to each of the ink jets of a respective jet group; and
   said replacement print mask includes at least one replacement jet group mask which replaces the jet group mask for a jet group having one or more nonfunctional ink jets, wherein the at least one replacement jet group mask allocates the printing of dots to all of the remaining functional ink jets of the jet group having one or more nonfunctional ink jets so as to compensate for the one or more nonfunctional ink jets.

3. An inkjet printer, comprising a printhead having a plurality of ink jets, each ink jet being assigned to print respective dots on a respective raster line of a recording medium in accordance with a print mask, wherein when an ink jet is detected as being defective, at least a portion of said print mask is replaced with a replacement print mask such that two or more of the remaining ink jets of the plurality of ink jets compensate for the defective ink jet.

4. The printer of Claim 3 wherein:

   said printhead comprises a plurality of print zones; and
   said plurality of ink jets comprises a plurality of jet groups, each jet group having at least one ink jet corresponding to each print zone, wherein each jet group is responsible for printing dots on a respective raster line of a recording medium, and wherein when an ink jet in a jet group is non-functional, all of the remaining functional ink jets in that jet group compensate for the non-functional ink jet.

5. The printer of Claim 3 wherein:

   said print mask comprises a plurality of jet group masks, each jet group mask corresponding to a respective one of said plurality of jet groups, each jet group mask having a plurality of jet masks, each jet mask corresponding to a respective ink jet in a respective jet group; and
   said replacement print mask comprises a replacement jet group mask which replaces the jet group mask for a jet group having one or more non-functional ink jets, wherein the replacement jet group mask allocates the printing of dots to all of the remaining functional ink jets of the jet group having one or more non-functional ink jets so as to compensate for the one or more non-functional ink jets.

6. The printer of Claim 5 wherein said replacement jet group mask comprises a plurality of replacement jet masks, each replacement jet mask corresponding to a respective ink jet in a respective jet group having one or more non-functional ink jets, and wherein the plurality of replacement jet masks allocate the printing of dots to the remaining functional ink jets in the respective jet group so as to compensate for the one or more non-functional ink jets in that jet group.

7. The printer of Claim 6 wherein, when an ink jet in a jet group is detected as being nonfunctional during a printing process, the replacement jet masks assigned to the remaining functional ink jets in that jet group successively replace the original jet masks of each respective ink jet in that jet group one print zone at a time, per pass of the printhead over the recording medium, so as to provide a gradual transition from the original jet group mask to the replacement jet group mask

8. The printer of Claim 3 wherein a first subset of said plurality of ink jets corresponds to a first jet group and a second subset of the plurality of ink jets corresponds to a second jet group;
   wherein ink jets belonging to the first jet group are each assigned to print respective dots on a first raster line of a recording medium in accordance with a first jet group mask, wherein when an ink jet in the first jet group is detected as being defective, the first jet group mask is replaced by a replacement jet group mask such that one or more of the remaining ink jets in the first jet group compensates for the defective ink jet in the first jet group; and
   wherein ink jets belonging to the second jet group are each assigned to print respective dots on a second raster line of the recording medium in accordance with a second jet group mask, wherein when an ink jet in the second jet group is detected as being defective, the second jet group mask is replaced by the replacement jet group mask such that one or more remaining ink jets in the second jet group compensates for the defective ink jet in the second jet group.

9. The printer of Claim 8 wherein:

   said replacement jet group mask comprises a plurality of replacement jet masks, each replacement jet mask determining the printing configuration of a designated ink jet; and

   wherein, when said first jet group is adjacent to said second jet group, the plurality of replacement jet masks are assigned to respective ink jets in the first and second jet groups so as to avoid the printing of vertically adjacent dots during a single pass of said printhead over the recording medium.

10. The printer of Claim 9 wherein said plurality of replacement jet masks are sequentially numbered and assigned to respective remaining functional ink jets of the first jet group based upon the print zone numbers of the remaining functional ink jets such that ascending replacement jet mask numbers correlate with ascending print zone numbers; and
    when said first jet group is adjacent to said second jet group, the plurality of replacement jet masks are assigned to respective remaining functional ink jets of the second jet group based on a rotation scheme such that the order of assignment of the plurality of replacement jet masks to respective functional ink jets in the second jet group is rotated when compared to the order of assignment of the plurality of replacement jet masks to respective functional ink jets in the first jet group so as to avoid the assignment of identical replacement jet masks to adjacent ink jets in one print zone.

11. A method of compensating for nonfunctional ink jets in an ink jet printer which includes a printhead having a plurality of ink jets, each ink jet being assigned to print respective dots on a respective raster line of a recording medium in accordance with a print mask, said method comprising the acts of:

    determining when one or more ink jets are nonfunctional; and
    replacing at least a portion of the print mask with a replacement print mask such that two or more of the remaining ink jets of the plurality of ink jets compensates for each one of the one or more nonfunctional ink jets.

12. The method of Claim 11, wherein said printhead comprises a plurality of print zones wherein only a portion of a raster line is printed in any one print zone, said plurality of ink jets comprise a plurality of jet groups, each jet group having at least one ink jet corresponding to each print zone, wherein each jet group is responsible for printing dots on a respective raster line of a recording medium, said print mask comprising a plurality of jet group masks, each jet group mask corresponding to a respective one of said plurality of jet groups, each jet group mask having a plurality of jet masks, each jet mask corresponding to a respective ink jet in a respective jet group, and wherein said act of replacing at least a portion of said print mask comprises:

when a jet group is determined to have one or more nonfunctional jets, replacing the jet group mask for that jet group with a replacement jet group mask which allocates the printing of dots on a respective raster line to all of the remaining functional ink jets of that jet group so as to compensate for the one or more nonfunctional ink jets in that jet group.

13. The method of Claim 12 wherein said replacement jet group mask comprises a plurality of replacement jet masks, each replacement jet mask corresponding to a respective ink jet in a respective jet group having one or more non-functional ink jets, and wherein the plurality of replacement jet masks allocate the printing of dots to all of the remaining functional ink jets in the respective jet group so as to compensate for the nonfunctional ink jets in that jet group, and wherein said act of replacing said jet group mask with a replacement jet group mask, comprises:

when an ink jet in a jet group is detected as being non-functional during a printing process, successively replacing the original jet masks of each respective ink jet in that jet group with the corresponding replacement jet masks assigned to each respective ink jet in that jet group one print zone at a time, per pass of the printhead over the recording medium, so as to provide a gradual transition from the original jet group mask to the replacement jet group mask

14. The method of Claim 11 wherein a first subset of said plurality of ink jets corresponds to a first jet group and a second subset of the plurality of ink jets corresponds to a second jet group, and wherein said act of replacing at least a portion of said print mask comprises:

when an ink jet in the first jet group is detected as being defective, replacing a first jet group mask corresponding to the first jet group with a replacement jet group mask such that two or more of the remaining ink jets in the first jet group compensates for the defective ink jet in the first jet group; and
when an ink jet in the second jet group is detected as being defective, replacing a second jet group mask corresponding to the second jet group with the replacement jet group mask such that two or more remaining ink jets in the second jet group compensates for the defective ink jet in the second jet group.

15. The method of Claim 14 wherein said replacement jet group mask comprises a plurality of replacement jet masks, each replacement jet mask determining the printing configuration of a designated ink jet, and wherein the method further comprises, when both the first and second jet groups have a nonfunctional ink jet, and when said first jet group is adjacent to said second jet group, assigning the plurality of replacement jet masks to respective ink jets in the first and second jet groups so as to avoid the printing of vertically adjacent dots during a single pass of said printhead over said recording medium.

16. The method of Claim 15 wherein the act of assigning the plurality of replacement jet masks to respective ink jets in the first and second jet groups comprises the acts of:

designating each replacement jet mask of said plurality of replacement jet masks with a sequential number; assigning each replacement jet mask to respective remaining functional ink jets in the first jet group based upon the print zone numbers of the remaining functional ink jets in the first jet group such that ascending replacement jet mask numbers correlate with ascending print zone numbers of the remaining functional ink jets in the first jet group; and
when said first jet group is adjacent to said second jet group, assigning the plurality of replacement jet masks to respective remaining functional ink jets in the second jet group based on a rotation scheme such that the order of assignment of the plurality of replacement jet masks to respective functional ink jets in the second jet group is rotated when compared to the order of assignment of the plurality of replacement jet masks to respective functional ink jets in the first jet group such that the correlation between replacement jet mask numbers and print zone numbers of functional ink jets in the second jet group is shifted when compared to the correlation between the replacement jet mask numbers and print zone numbers of functional ink jets in the first jet group, so as to avoid the assignment of identical replacement jet masks to adjacent ink jets in one print zone.

**EP 0 999 935 B1**

**Patentansprüche**

1. Tintenstrahldrucker, der nicht funktionierende Tintenstrahldüsen in einem Druckkopf ersetzt, **gekennzeichnet durch**

   einen an einen Hostcomputer angeschlossenen Prozessor, der vom Hostcomputer Druckdaten und -befehle empfängt;

   einen mit dem Prozessor verbundenen Speicher, der mindestens eine erste Druckmaske und mindestens eine Ersatzdruckmaske speichert;

   eine mit dem Prozessor verbundene Drucker-Logikschaltung, die vom Prozessor Signale empfängt, um den Betrieb des Druckkopfs zu steuern,

   wobei der Druckkopf eine Vielzahl von Tintenstrahldüsen aufweist, von denen jede für das Drucken von Punkten auf einer Rasterzeile eines Aufzeichnungsmediums gemäß der im Speicher gespeicherten mindestens einen ersten Druckmaske bestimmt ist, wobei, wenn sich eine Tintenstrahldüse als defekt erweist, mindestens ein Abschnitt der Druckmaske **durch** die mindestens eine, ebenfalls im Speicher gespeicherte Ersatzdruckmaske ersetzbar ist, und wobei ursprünglich von der defekten Tintenstrahldüse unter Steuerung der ersten Druckmaske zu druckende Punkte von der Ersatzdruckmaske in ungefähr gleicher Weise zwischen mindestens zwei der übrigen Tintenstrahldüsen aus der Vielzahl von Tintenstrahldüsen neu zugewiesen werden, um die defekte Tintenstrahldüse zu ersetzen.

2. Tintenstrahldrucker nach Anspruch 1, **dadurch gekennzeichnet, dass**

   der Druckkopf eine Vielzahl von Druckzonen und in jeder Druckzone eine Vielzahl von Tintenstrahldüsen umfasst, von denen jede Düse für das Drucken von Punkten auf einer entsprechenden Rasterzeile eines Aufzeichnungsmediums bestimmt ist, wobei die Vielzahl von Tintenstrahldüsen in eine Vielzahl von Düsengruppen aufgeteilt ist, von denen jede Gruppe in jeder Druckzone mindestens eine Tintenstrahldüse aufweist;

   die Druckmaske eine Vielzahl von Düsengruppenmasken umfasst entsprechend einer Gruppe aus der Vielzahl von Düsengruppen, wobei jede Düsengruppenmaske das Drucken von Punkten auf einer Rasterzeile einer jeden Tintenstrahldüse einer entsprechenden Düsengruppe zuweist; und dass

   die Ersatzdruckmaske mindestens eine Ersatzdüsengruppenmaske umfasst, welche eine Düsengruppe mit mindestens einer nicht funktionierenden Tintenstrahldüse durch die Düsengruppenmaske ersetzt, wobei die mindestens eine Ersatzdüsengruppenmaske das Drucken von Punkten all den übrigen funktionierenden Tintenstrahldüsen der Düsengruppe zuweist, die mindestens eine nicht funktionierende Tintenstrahldüse umfasst, um die mindestens eine nicht funktionierende Tintenstrahldüse zu ersetzen.

3. Tintenstrahldrucker mit einem Druckkopf, der eine Vielzahl von Tintenstrahldüsen aufweist, von denen jede Düse für das Drucken von Punkten auf einer Rasterzeile eines Aufzeichnungsmediums gemäß einer Druckmaske bestimmt ist, wobei, wenn eine Düse sich als defekt erweist, mindestens ein Abschnitt der Druckmaske durch eine Ersatzdruckmaske ersetzbar ist derart, dass die defekte Tintenstrahldüse durch mindestens zwei der übrigen Tintenstrahldüsen aus der Vielzahl von Tintendüsen ersetzt wird.

4. Tintenstrahldrucker nach Anspruch 3, **dadurch gekennzeichnet, dass**

   der Druckkopf eine Vielzahl von Druckzonen aufweist; und dass

   die Vielzahl von Tintenstrahldüsen eine Vielzahl von Düsengruppen aufweist, von denen jede Gruppe mindestens eine Tintenstrahldüse entsprechend einer jeden Druckzone umfasst, wobei jede Gruppe verantwortlich ist für das Drucken von Punkten auf einer Rasterzeile eines Aufzeichnungsmediums, und wobei, wenn eine Tintenstrahldüse innerhalb einer Düsengruppe nicht funktioniert, diese Tintenstrahldüse durch alle übrigen funktionierenden Tintenstrahldüsen innerhalb dieser Düsengruppe ersetzt wird.

5. Tintenstrahldrucker nach Anspruch 3, **dadurch gekennzeichnet, dass**

   die Druckmaske eine Vielzahl von Düsengruppenmasken aufweist, von denen jede einer entsprechenden Düsengruppe aus der Vielzahl von Düsengruppen entspricht, wobei jede Düsengruppenmaske eine Vielzahl von Düsenmasken umfasst, von denen jede einer Tintenstrahldüse in einer entsprechenden Düsengruppe entspricht; und dass

   die Ersatzdruckmaske eine Ersatzdüsengruppenmaske aufweist, welche eine Düsengruppe mit mindestens einer nicht funktionierenden Tintenstrahldüse durch die Düsengruppenmaske ersetzt, wobei die Ersatzdüsengruppenmaske das Drucken von Punkten all den übrigen funktionierenden Tintenstrahldüsen innerhalb der Düsengruppe zuweist, die mindestens eine nicht funktionierende Tintenstrahldüsen umfasst, um die mindestens eine nicht funktionierende Tintenstrahldüse zu ersetzen.

**6.** Tintenstrahldrucker nach Anspruch 5, **dadurch gekennzeichnet, dass** die Ersatzdüsengruppenmaske eine Vielzahl von Ersatzdüsenmasken aufweist, von denen jede einer entsprechenden Tintenstrahldüse innerhalb einer Düsengruppe entspricht, die mindestens eine nicht funktionierende Tintenstrahldüse umfasst, und wobei die Vielzahl von Ersatzdüsenmasken das Drucken von Punkten den übrigen funktionierenden Tintenstrahldüsen innerhalb der jeweiligen Düsengruppe zuweist derart, dass mindestens eine nicht funktionierende Tintenstrahldüse innerhalb dieser Düsengruppe ersetzbar ist.

**7.** Tintenstrahldrucker nach Anspruch 6, **dadurch gekennzeichnet, dass**, wenn sich eine Tintenstrahldüse innerhalb einer Düsengruppe während eines Druckvorgangs als nicht funktionierend erweist, die den übrigen funktionierenden Tintenstrahldüsen innerhalb dieser Düsengruppe zugeordneten Ersatzdüsenmasken die ursprünglichen Düsenmasken einer jeden Tintenstrahldüse innerhalb dieser Gruppe druckzonenweise nach und nach ersetzen, sobald der Druckkopf über das Aufzeichnungsmedium streicht, um einen allmählichen Übergang zu schaffen von der ursprünglichen Düsengruppenmaske hin zur Ersatzdüsengruppenmaske.

**8.** Tintenstrahldrucker nach Anspruch 3, **dadurch gekennzeichnet, dass**
eine erste Untergruppe aus der Vielzahl von Tintenstrahldüsen einer ersten Düsengruppe und eine zweite Untergruppe aus der Vielzahl von Tintenstrahldüsen einer zweiten Untergruppe entspricht; dass
zur ersten Düsengruppe gehörende Tintenstrahldüsen für das Drucken von Punkten auf einer ersten Rasterzeile eines Aufzeichnungsmediums gemäß einer ersten Düsengruppenmaske bestimmt sind, wobei, wenn sich eine Tintenstrahldüse innerhalb der ersten Düsengruppe als defekt erweist, die erste Düsengruppenmaske durch eine Ersatzdüsengruppenmaske ersetzbar ist derart, dass die defekte Tintenstrahldüse innerhalb der ersten Düsengruppe durch mindestens eine der übrigen Tintenstrahldüsen innerhalb der ersten Düsengruppe ersetzbar ist, und dass
zur zweiten Düsengruppe gehörende Tintenstrahldüsen für das Drucken von Punkten auf einer zweiten Rasterzeile eines Aufzeichnungsmediums gemäß einer zweiten Düsengruppenmaske bestimmt sind, wobei, wenn sich eine Tintenstrahldüse innerhalb der zweiten Düsengruppe als defekt erweist, die zweite Düsengruppenmaske durch eine Ersatzdüsengruppenmaske ersetzbar ist derart, dass die defekte Tintenstrahldüse innerhalb der zweiten Düsengruppe durch mindestens eine der übrigen Tintenstrahldüsen innerhalb der zweiten Düsengruppe ersetzbar ist .

**9.** Tintenstrahldrucker nach Anspruch 8, **dadurch gekennzeichnet, dass**
die Ersatzdüsengruppenmaske eine Vielzahl von Ersatzdüsenmasken aufweist, von denen jede die Druckkonfiguration einer vorgegebenen Tintenstrahldüse bestimmt; und dass,
wenn die erste Düsensatzgruppe der zweiten Düsensatzgruppe benachbart ist, die Vielzahl von Ersatzdüsenmasken entsprechenden Tintenstrahldüsen innerhalb der ersten und zweiten Düsengruppe zugeordnet ist, um das Drucken vertikal benachbarter Punkte während eines einzelnen Überstreichens des Druckkopfs über das Aufzeichnungsmedium zu verhindern.

**10.** Tintenstrahldrucker nach Anspruch 9, **dadurch gekennzeichnet, dass**
die Vielzahl von Ersatzdüsenmasken aufeinanderfolgend nummeriert und den übrigen funktionierenden Tintenstrahldüsen der ersten Düsengruppe zugewiesen werden auf der Grundlage der Druckzonennummern der übrigen funktionierenden Tintenstrahldüsen derart, dass aufsteigende Nummern der Ersatzdüsenmasken mit aufsteigenden Nummern der Druckzonen korrelieren; und dass,
wenn die erste Düsengruppe der zweiten Gruppe benachbart ist, die Vielzahl von Ersatzdüsenmasken den übrigen funktionierenden Tintenstrahldüsen der zweiten Düsengruppe zugewiesen werden auf der Grundlage eines Rotationsschemas derart, dass die Reihenfolge der Zuweisung der Vielzahl von Ersatzdüsenmasken zu den jeweils funktionierenden Tintenstrahldüsen innerhalb der zweiten Düsengruppe umgekehrt wird im Vergleich zur Reihenfolge der Zuweisung der Vielzahl von Ersatzdüsenmasken zu den jeweils funktionierenden Tintenstrahldüsen innerhalb der ersten Düsengruppe, um die Zuweisung identischer Ersatzdüsenmasken zu benachbarten Tintenstrahldüsen innerhalb einer Druckzone zu verhindern.

**11.** Verfahren zum Ersetzen nicht funktionierender Tintenstrahldüsen in einem Tintenstrahldrucker, der einen Druckkopf aufweist mit einer Vielzahl von Tintenstrahldüsen, von denen jede für das Drucken von Punkten auf einer Rasterzeile eines Aufzeichnungsmediums gemäß einer Druckmaske bestimmt ist, **gekennzeichnet durch** die Schritte:

Bestimmen, wann mindestens eine der Tintenstrahldüsen nicht funktioniert; und

Ersetzen mindestens eines Abschnitts der Druckmaske **durch** eine Ersatzdruckmaske derart, dass jede der mindestens einen nicht funktionierenden Tintenstrahldüsen ersetzt wird **durch** mindestens zwei der übrigen Tintenstrahldüsen aus der Vielzahl von Tintenstrahldüsen.

**12.** Verfahren nach Anspruch 11, **dadurch gekennzeichnet, dass** der Druckkopf eine Vielzahl von Druckzonen aufweist, dass nur ein Abschnitt einer Rasterzeile in einer der Druckzonen gedruckt wird, wobei die Vielzahl von Tintenstrahldüsen eine Vielzahl von Düsengruppen umfasst, von denen jede mindestens eine einer jeden Druckzone entsprechende Tintenstrahldüse aufweist; dass jede Düsengruppe verantwortlich ist für das Drucken von Punkten auf einer entsprechenden Rasterzeile eines Aufzeichnungsmediums, wobei die Druckmaske eine Vielzahl von Düsengruppenmasken umfasst, von denen jede einer aus der Vielzahl von Düsengruppen entspricht, und wobei jede Düsengruppenmaske eine Vielzahl von Düsenmasken aufweist, von denen jede einer Tintenstrahldüse innerhalb einer entsprechenden Düsengruppe entspricht, und dass der Schritt des Ersetzens mindestens eines Abschnitts der Druckmaske folgenden Schritt umfasst:

wenn feststeht, dass eine Düsengruppen mindestens eine nicht funktionierende Düse aufweist, Ersetzen der Düsengruppenmaske für diese Düsengruppe durch eine Ersatzdüsengruppenmaske, die das Drucken von Punkten auf einer jeweiligen Rasterzeile all den übrigen funktionierenden Tintenstrahldüsen dieser Düsengruppe zuweist derart, dass die mindestens eine nicht funktionierende Tintenstrahldüse innerhalb dieser Düsengruppe ersetzt wird.

**13.** Verfahren nach Anspruch 12, **dadurch gekennzeichnet, dass** die Ersatzdüsengruppenmaske eine Vielzahl von Ersatzdüsenmasken aufweist, von denen jede einer entsprechenden Tintenstrahldüse innerhalb einer Düsengruppe mit mindestens einer nicht funktionierenden Tintenstrahldüsen entspricht, dass die Vielzahl von Ersatzdüsenmasken das Drucken von Punkten all den übrigen funktionierenden Tintenstrahldüsen innerhalb der jeweiligen Düsengruppe zuweist derart, dass die nicht funktionierenden Tintenstrahldüsen innerhalb dieser Düsengruppe ersetzt werden, und dass der Schritt des Ersetzens der Düsengruppenmaske durch eine Ersatzdüsengruppenmaske folgenden Schritt umfasst:

wenn sich eine Tintenstrahldüse innerhalb einer Düsengruppe während eines Druckvorgangs als nicht funktionierend erweist, nach und nach druckzonenweises Ersetzen der ursprünglichen Düsenmasken einer jeden Tintenstrahldüse innerhalb dieser Düsengruppe durch die entsprechenden, einer jeden Tintenstrahldüse innerhalb dieser Düsengruppe zugeordneten Ersatzdüsenmasken dieser Gruppe, sobald der Druckkopf über das Aufzeichnungsmedium streicht, um einen allmählichen Übergang von der ursprünglichen Düsengruppenmaske hin zur Ersatzdüsengruppenmaske zu schaffen.

**14.** Verfahren nach Anspruch 11, **dadurch gekennzeichnet, dass** eine erste Untergruppe aus der Vielzahl von Tintenstrahldüsen einer ersten Düsengruppe und eine zweite Untergruppe aus der Vielzahl von Tintenstrahldüsen einer zweiten Untergruppe entspricht; und dass der Schritt des Ersetzens mindestens eines Abschnitts der Druckmaske folgenden Schritt umfasst:

wenn sich eine Tintenstrahldüse innerhalb der ersten Düsengruppe als defekt erweist, Ersetzen einer der ersten Düsengruppe entsprechenden ersten Düsengruppenmaske durch eine Ersatzdüsengruppenmaske derart, dass die defekte Tintenstrahldüse innerhalb der ersten Düsengruppe durch mindestens zwei der übrigen Tintenstrahldüsen innerhalb der ersten Düsengruppe ersetzt wird, und

wenn sich eine Tintenstrahldüse innerhalb der zweiten Düsengruppe als defekt erweist, Ersetzen einer der zweiten Düsengruppe entsprechenden zweiten Düsengruppenmaske durch die Ersatzdüsengruppenmaske derart, dass die defekte Tintenstrahldüse innerhalb der zweiten Düsengruppe durch mindestens zwei der übrigen Tintenstrahldüsen innerhalb der zweiten Düsengruppe ersetzt wird.

**15.** Verfahren nach Anspruch 14, **dadurch gekennzeichnet, dass** die Ersatzdüsengruppenmaske eine Vielzahl von Ersatzdüsenmasken aufweist, von denen jede die Druckkonfiguration einer vorgegebenen Tintenstrahldüse bestimmt; und dass das Verfahren den Schritt umfasst, dass, wenn die erste und zweite Düsengruppe eine nicht funktionierende Tintenstrahldüse aufweisen und die erste Düsengruppe der zweiten Düsengruppe benachbart ist, Zuweisen der Vielzahl von Ersatzdüsenmasken zu entsprechenden Tintenstrahldüsen innerhalb der ersten und zweiten Düsengruppe, um zu verhindern, dass vertikal benachbarte Punkte während eines einzelnen Überstreichens des Druckkopfs über das Aufzeichnungsmedium gedruckt werden.

**16.** Verfahren nach Anspruch 15, **dadurch gekennzeichnet, dass** der Schritt des Zuweisens der Vielzahl von Ersatzdüsenmasken zu entsprechenden Tintenstrahldüsen innerhalb der ersten und zweiten Düsengruppe die Schritte umfasst:

Bezeichnen einer jeden Ersatzdüsenmaske aus der Vielzahl von Ersatzdüsenmasken mit aufeinanderfolgenden Nummern;

Zuweisen einer jeden Ersatzdüsenmaske zu übrigen funktionierenden Tintenstrahldüsen innerhalb der ersten Düsengruppe auf der Grundlage der Druckzonennummern der übrigen funktionierenden Tintenstrahldüsen innerhalb der ersten Düsengruppe derart, dass aufsteigende Nummern der Ersatzdüsenmasken mit aufsteigenden Nummern der Druckzonen der übrigen funktionierenden Tintenstrahldüsengruppe korrelieren; und,

wenn die erste Düsengruppe der zweiten Gruppe benachbart ist, Zuweisen der Vielzahl von Ersatzdüsenmasken zu den übrigen funktionierenden Tintenstrahldüsen innerhalb der zweiten Düsengruppe auf der Grundlage eines Rotationsschemas derart, dass die Reihenfolge der Zuweisung der Vielzahl von Ersatzdüsenmasken zu den jeweils funktionierenden Tintenstrahldüsen innerhalb der zweiten Düsengruppe umgekehrt wird im Vergleich zur Reihenfolge der Zuweisung der Vielzahl von Ersatzdüsenmasken zu den jeweils funktionierenden Tintenstrahldüsen der ersten Düsengruppe derart, dass die Korrelation zwischen Nummern der Ersatzdüsenmasken und Nummern der Druckzonen funktionierender Tintenstrahldüsen innerhalb der zweiten Düsengruppe verschoben wird im Vergleich mit der Korrelation zwischen den Nummern von Ersatzdüsenmasken und den Nummern der Druckzonen funktionierender Tintenstrahldüsen innerhalb der ersten Gruppe, um zu verhindern, dass identische Ersatzdüsenmasken benachbarten Tintenstrahldüsen innerhalb einer Druckzone zugewiesen werden.

**Revendications**

**1.** Imprimante à jet d'encre qui compense le non-fonctionnement de jets d'encre dans une tête d'impression, comprenant :

un processeur, couplé à un ordinateur hôte, qui reçoit les données d'impression et les commandes transmises par l'ordinateur hôte;
une mémoire, couplée au processeur, qui stocke au moins un premier masque d'impression et au moins un masque d'impression de remplacement ;
un circuit logique d'impression, couplé au processeur, qui reçoit les signaux transmis par le processeur pour commander le fonctionnement de la tête d'impression ; et
dans laquelle la tête d'impression contient une pluralité de jets d'encre, chaque jet d'encre étant alloué à l'impression de points correspondants sur une ligne de trame donnée d'un support d'enregistrement conformément au premier masque d'impression stocké dans la mémoire, dans laquelle, lorsqu'un jet d'encre est détecté comme étant défectueux, au moins une portion dudit masque d'impression est remplacée par ledit masque d'impression de remplacement également stocké dans la mémoire, dans laquelle les points qui étaient initialement imprimés par ledit jet d'encre défectueux sous le contrôle dudt premier masque d'impression sont réaffectés par ledit masque d'impression de remplacement, d'une manière approximativement égale, entre deux ou plusieurs des autres jets d'encre de la pluralité de jets d'encre de manière à comp enser le jet d'encre défectueux.

**2.** Imprimante à jet d'encre selon la revendication 1, dans laquelle :

ladite tête d'impression contient une pluralité de zones d'impression et une pluralité de jets d'encre dans chaque zone d'impression, chaque jet d'encre étant alloué à l'impression de points correspondants sur une ligne de trame donnée d'un support d'enregistrement, dans laquelle la pluralité de jets d'encre est divisée en une pluralité de groupes de jets, chaque groupe de jets ayant au moins un jet d'encre dans chaque zone d'impression ;
ledit masque d'impression contient une pluralité de masques de groupe de jets correspondant à un grou pe de jets donné de ladite pluralité de groupes de jets, dans lequel chaque masque de groupe de jets alloue l'impression de points sur une ligne de trame donnée respectivement à cha cun des jets d'encre d'un groupe de jets d'encre correspondant; et
ledit masque d'impression de remplacement contient au moins un masque de groupe de jets de remplacement qui remplace le masque de groupe de jets d'un groupe de jets contenant un ou plusieurs jets d'encre défectueux, dans lequel le masque de groupe de jets de remplacement alloue l'impression de points à tous les jet s d'encre fonctionnels restants du groupe de jets contenant un ou plusieurs jets d'encre défectueux de manière à compenser le non-fonctionnement de ce ou ces jets d'encre.

3. Imprimante à jet d'encre comprenant une tête d'impression ayant une pluralité de jets d'encre, chaque jet d'encre étant alloué à l'impression de points correspondant s sur une ligne de trame donnée d'un support d'enregistrement conformément à un masque d'impression, dans laquelle, lorsqu'un jet d'encre est détecté comme étant défectueux, au moins une portion dudit masque d'impression est remplacée par un masque d'impression de remplacement de telle sorte qu'au moins deux des autres jets d'encre de la pluralité de jets d'encre compensent le jet d'encre défectueux.

4. Imprimante selon la revendication 3, dans laquelle :

ladite tête d'impression comprend une pluralité de zones ; et
ladite pluralité de jets d'encre comprend une pluralité de groupes de jets, chaque groupe de jets ayant au moins un jet d'encre correspondant à chaque zo ne d'impression, dans laquelle chaque groupe de jets est chargé de l'impression de points sur une ligne de trame donnée d'un support d'enregistrement, et dans laquelle, lorsqu'un jet d'encre d'un groupe de jets est défectueux, tous les autres jets d'encre fonctionnels de ce groupe de jets compensent le jet d'encre défectueux.

5. Imprimante selon la revendication 3, dans laquelle :

ledit masque d'impression comprend une pluralité de masques de groupes de jets, chaque masque de groupe de jets correspondant respectivement à un groupe de jets donné de ladite pluralité de groupes de jets, chaque masque de groupe de jets ayant une pluralité de masques de jets, chaque masque de jet correspondant à un je t d'encre donné du groupe de jets correspondant ; et
ledit masque d'impression de remplacement comprend un masque de groupe de jets de remplacement qui remplace le masque de groupe de jets d'un groupe de jets contenant un ou plusieurs jets d'encre défectueux, dans lequel le masque de groupe de jets de remplacement alloue l'impression de points à tous les jets d'encre fonctionnels restants du groupe de jets contenant un ou plusieurs jets d'encre défectueux de manière à compenser le non-fonctionnement de ce ou ces jets d'encre.

6. Imprimante selon la revendication 5, dans laquelle ledit masque de groupe de jets de remplacement comprend une pluralité de masques de jets de remplacement, chaque masque de jet de remplacement correspondant respectivement à un jet d'encre donné du groupe de jets correspondant ayant un ou plusieurs jets d'encre défectueux, et dans laquelle la pluralité de masques de jets de remplacement alloue respectivement l'impression des points aux autres jets d'encre fonctionnels du groupe de jets correspondant de manière à co mpenser le non-fonctionnement du ou des jets d'encre dans ce groupe de jets.

7. Imprimante selon la revendication 6, dans laquelle, lorsqu'un jet d'encre d'un groupe de jets est détecté comme étant défectueux pendant un processus d'impression, les masques de jets de remplacement alloués aux autres jets d'encre fonctionnels dans ce groupe de jets remplacent successivement, zone d'impression par zone d'impression, les masques de jets initiaux de chaque jet d'encre correspondant dans ce groupe de jets, à chaque passe de la tête d'impression sur le support d'enregistrement, de manière à obtenir un passage progressif du masque de groupes de jets initial au masque de groupes de jets de remplacement.

8. Imprimante selon la revendication 3, dans laquelle un premier sous-ensemble de ladite pluralité de jets d'encre correspond à un premier groupe de jets et un second sous-ensemble de la pluralité de jets d'encre correspond à un second groupe de jets ;
dans laquelle les jets d'encre appartenant au premier groupe de jets sont chacun alloués à l'impression d e points correspondants sur une première ligne de trame d'un support d'enregistrement conformément à un pre mier masque de groupe de jets, dans laquelle, lorsqu'un jet d'encre du premier groupe de jets est détecté comme étant défectueux, le premier masque de groupe de jets est remplacé par un masque de groupe de jets de remplacement de telle sorte qu'un ou plusieurs des jets d'encre restants dans le premier groupe de jets compensent le jet d'encre défectueux dans le premier groupe de jets ; et
dans laquelle les jets d'encre appartenant au second groupe de jets sont chacun alloués à l'impression d e points correspondants sur une seconde ligne de trame du support d'enregistrement conformément à un sec ond masque de groupe de jets, dans laquelle, lorsqu'un jet d'encre du second groupe de jets est détecté comme étant défectueux, le second masque de groupe de jets est remplacé par le masque de groupe de jets de remplacement de telle sorte qu'un ou plusieurs des jets d'encre restants dans le second groupe de jets compensent le jet d'encre défectueux dans le second groupe de jets.

9. Imprimante selon la revendication 8, dans laquelle :

ledit masque de groupe de jets de remplacement comprend une pluralité de masques de jets de remplacement, chaque masque de jet de remplacement déterminant la configuration d'impression d'un jet d'encre désigné ; et dans laquelle, lorsque ledit premier groupe de jets est adjacent audit second groupe de jets, la pluralité de masques de jets de remplacement est respectivement allouée aux jets d'encre correspondants dans les premier et second groupes de jets de manière à éviter l'impression de points verticalement adjacents pendant une seule passe de ladite tête d'impression sur le support d'enregistrement.

10. Imprimante selon la revendication 9, dans laquelle ladite pluralité de masques de jets de remplacement est numérotée et allouée séquentiellement aux jets d'encre fonctionnels restants correspondants du premier groupe de jets en se basant sur les numéros de zones d'impression des jets d'encre fonctionnels restants de telle sorte que les numéros ascendants de masques de jets de remplacement sont en corrélation avec les numéros ascendants de zones d'impression ; et

dans laquelle ledit premier groupe de jets est adjacent audit second groupe de jets, la pluralité de masques de jets de remplacement est allouée aux jets d'encre fonctionnels restants correspondants du second groupe de jets en se basant sur un schéma de rotation de telle sorte que l'ordre d'allocation de la pluralité de masques de jets de remplacement aux jets d'encre fonctionnels correspondants dans le second groupe de jets subit une rotation comparé à l'ordre d'allocation de la pluralité de masques de jets de remplacement aux jets d'encre fonctionnels correspondants dans le premier groupe de jets, de manière à éviter l'allocation de masques de jets de remplacement identiques à des jets d'encre adjacents dans une zone d'impression.

11. Procédé pour compenser le non-fonctionnement de jets d'encre dans une imprimante à jet d'encr e qui contient une tête d'impression ayant une pluralité de jets d'encre, chaque jet d'encre étant alloué à l'impr ession de points correspondants sur une ligne de trame donnée d'un support d'enregistrement conformément à un masque d'impression, ledit procédé comprenant les opérations suivantes :

détermination du non-fonctionnement d'un ou plusieurs jets d'encre ; et
remplacement d'au moins une portion du masque d'impression par un masque d'impression de remplacement de telle sorte qu'au moins deux des jets d'encre restants de la pluralité de jets d'encre compensent chacun des un ou plusieurs jets d'encre défectueux.

12. Procédé selon la revendication 11, dans lequel ladite tête d'impression comprend une pluralité de zones d'impression dans lesquelles seulement une portion d'une ligne de trame est imprimée dans une zone d'impression, ladite pluralité de jets d'encre comprend une pluralité de groupes de jets, chaque groupe de jets ayant au moins un jet d'encre correspondant à chaque zone d'impression, dans lequel chaque groupe de jets est chargé de l'impression de points sur une ligne de trame donnée d'un support d'enregistrement, ledit masque d'impression comprenant une pluralité de masques de groupes de jets, chaque masque de groupe de jets correspondant respectivement à un groupe de jets donné de ladite pluralité de groupes de jets, chaque masque de groupe de jets ayant une pluralité de masques de jets, chaque masque de jet correspondant respectivement à un jet d'encre donné d'un groupe de jets correspondant, et dans lequel ladite opération de remplacement d'au moins une portion dudit masque d'impression comprend :

lorsqu'un groupe de jets est détecté comme ayant un ou plusieurs jets défectueux, le remplacement du masque de groupe de jets de ce groupe de jets par un masque de groupe de jets de remplacement qui alloue l'impression de points sur une ligne de trame correspondante à tous le s jets d'encre fonctionnels restants de ce groupe de jets de manière à compenser le non-fonctionnement d'un ou plusieurs jets d'encre dans ce groupe de jets.

13. Procédé selon la revendication 12, dans lequel ledit masque de groupe de jets de remplacement comprend une pluralité de masques de jets de remplacement, chaque masque de jet de remplacement correspondant respectivement à un jet d' encre donné du groupe de jets correspondant ayant un ou plusieurs jets d'encre défectueux, et dans lequel la pluralité de masques de jets de remplacement alloue l'impression des points à tous les jets d'encre fonctionnels restants du groupe de jets correspondant de manière à compenser les jets d'encre défectueux dans ce groupe de jets, et dans lequel ladite opération de remplacement dudit masque de groupe de jets par un masque de groupe de jets de remplacement comprend :

lorsqu'un jet d'encre d'un groupe de jets est détecté comme étant défectueux pendant un processus d'impression, le remplacement successif, zone d'impression par zone d'impression, des masques de jets initiaux de chaque jet d'encre correspondant dans ce groupe de jets par les masques de jets de remplacement correspondants alloués à chaque jet d'encre respectif dans ce groupe de jets, à chaque passe d e la tête d'impression sur le support d'enregistrement, de manière à obtenir un pa ssage progressif du masque de groupe de jets initial au masque de groupe de jets de remplacement.

**14.** Procédé selon la revendication 11, dans lequel un premier sous-ensemble de ladite pluralité de jets d'encre correspond à un p remier groupe de jets et un second sous-ensemble de la pluralité de jets d'encre correspond à un second groupe de jets, et dans lequel ladite opération de remplacement d'au moins une portion dudit masque d'impression comprend :

lorsqu'un jet d'encre du premier groupe de jets est détecté comme étant défectueux, le remplacement d'un premier masque de groupe de jets correspondant au premier groupe de jets par un masque de groupe de jets de remplacement, de telle sorte qu'au moins deux des jets d'encre restants dans le premier groupe de jets compensent le jet d'encre défectueux dans le premier groupe de jets ; et
lorsqu'un jet d'encre du second groupe de jets est détecté comme étant défectueux, le remplacement d'un second masque de groupe de jets correspondant au second groupe de jets par un masque de groupe de jets de remplacement, de telle sorte qu'au moins deux des jets d'encre restants dans le second groupe de jets compensent le jet d'encre défectueux dans le second groupe de jets.

**15.** Procédé selon la revendication 14, dans lequel ledit masque de groupe de jets de remplacement comprend une pluralité de masques de jets de remplacement, chaque masque de jet de remplacement déterminant la configuration d'impression d'un jet d'encre désigné, et dans lequel le procédé comprend aussi, lorsque les premier et second groupes de jets contiennent tous les deux un jet d'encre défectueux, et lorsque ledit premier groupe de jets est adjacent audit second groupe de jets, l'allocation de la pluralité de masques de jets de remplacement aux jets d'encre correspondants dans les premier et second groupes de jets afin d'éviter l'impression de points verticalement adjacents pendant une seule passe de ladite tête d'impression sur ledit support d'enregistrement.

**16.** Procédé selon la revendication 15, dans lequel l'opération d'allocation de la pluralité des masques de jets de remplacement aux jets d'encre correspondants dans les premier et second groupes de jets comprend les opérations de :

désignation de chaque masque de jet de remplacement de ladite pluralité de masques de jets de remplacement par un numéro d'ordre ;
l'allocation de chaque masque de jet de remplacement aux jets d'encre fonctionnels restants correspondants dans le premier groupe de jets en se basant sur les numéros de zones d'impression des jets d'encre fonctionnels restants dans le premier groupe de jets de telle sorte que les numéros ascendants de masques de jets de remplacement sont en corrélation avec les numéros ascendants de zones d'impression des jets d'encre fonctionnels restants dans le premier groupe de jets ; et
lorsque ledit premier groupe de jets est adjacent audit second groupe de jets, l'allocation de la pluralité de masques de jets de remplacement aux jets d'encre fonctionnels restants correspondants dans le second groupe de jets en se basant sur un schéma de rotation de telle sorte que l'ordre d'allocation de la pluralité de masques de jets de remplacement aux jets d'encre fonctionnels correspondants dans le second groupe de jets subit une rotation comparé à l'ordre d'all ocation de la pluralité de masques de jets de remplacement aux jets d'encre fonctionnels correspondants dans le premier groupe de jets, de manière à ce que la corrélation entre les numéros de masques de jets de remplacement et les numéros de zones d'impression des jets d'encre fonctionnels dans le second groupe de jets soit décalée par rapport à la corrélation entre les numéros de masques de jets de remplacement et les numéros de zones d'impression des jets d'encre fonctionnels dans le premier groupe de jets, de manière à éviter l'allocation de masques de jets de remplacement identiques à des jets d'encre adjacents dans une zone d'impression.

FIG. 1

EP 0 999 935 B1

EP 0 999 935 B1

FIG. 2a

FIG. 2b

100

**FIG. 2**

| FIG. 2a |
| FIG. 2b |
| FIG. 2c |
| FIG. 2d |
| FIG. 2e |
| FIG. 2f |

| Jet Mask # | Group # | Zone # |
|---|---|---|
| 1 | 1 | 1 |
| 2 | 2 | 1 |
| 3 | 3 | 1 |
| 4 | 4 | 1 |
| 5 | 5 | 1 |
| 6 | 6 | 1 |
| 7 | 7 | 1 |
| 8 | 8 | 1 |
| 9 | 9 | 1 |
| 10 | 10 | 1 |
| 11 | 11 | 1 |
| 12 | 12 | 1 |
| 13 | 13 | 1 |
| 14 | 14 | 1 |
| 15 | 15 | 1 |
| 16 | 16 | 1 |
| 17 | 17 | 1 |
| 18 | 1 | 2 |
| 19 | 2 | 2 |
| 20 | 3 | 2 |
| 21 | 4 | 2 |
| 22 | 5 | 2 |
| 23 | 6 | 2 |
| 24 | 7 | 2 |
| 25 | 8 | 2 |
| 26 | 9 | 2 |
| 27 | 10 | 2 |
| 28 | 11 | 2 |
| 29 | 12 | 2 |
| 30 | 13 | 2 |
| 31 | 14 | 2 |
| 32 | 15 | 2 |
| 33 | 16 | 2 |
| 34 | 17 | 2 |

FIG. 2c

FIG. 2d

FIG. 2e

FIG. 2f

100

EP 0 999 935 B1

| Jet Mask # | Group # | Zone # |
|---|---|---|
| 69 | 1 | 2 |
| 70 | 2 | 2 |
| 71 | 3 | 2 |
| 72 | 4 | 2 |
| 73 | 5 | 2 |
| 74 | 6 | 2 |
| 75 | 7 | 2 |
| 76 | 8 | 2 |
| 77 | 9 | 2 |
| 78 | 10 | 2 |
| 79 | 11 | 2 |
| 80 | 12 | 2 |
| 81 | 13 | 2 |
| 82 | 14 | 2 |
| 83 | 15 | 2 |
| 84 | 16 | 2 |
| 85 | 17 | 2 |
| 86 | 1 | 3 |
| 87 | 2 | 3 |
| 88 | 3 | 3 |
| 89 | 4 | 3 |
| 90 | 5 | 3 |
| 91 | 6 | 3 |
| 92 | 7 | 3 |
| 93 | 8 | 3 |
| 94 | 9 | 3 |
| 95 | 10 | 3 |
| 96 | 11 | 3 |
| 97 | 12 | 3 |
| 98 | 13 | 3 |
| 99 | 14 | 3 |
| 100 | 15 | 3 |
| 101 | 16 | 3 |
| 102 | 17 | 3 |
| 103 | not used | |
| 104 | not used | |

PRINT MASK #2

| Jet Mask # | Group # | Zone # |
|---|---|---|
| 2 | 2 | 1 |
| 19 | 2 | 2 |
| 36 | 2 | 3 |
| 53 | 2 | 4 |
| 70 | 2 | 5 |
| 87 | 2 | 6 |

FIG. 3

FIG. 4

*FIG. 5*

ZONE 1

ZONE 1+2

ZONE 1+2+3

ZONE 1+2+3+4

ZONE 1+2+3+4+5

ZONE 1+2+3+4+5+6

EP 0 999 935 B1

FIG. 6

EP 0 999 935 B1

**FIG. 7**

EP 0 999 935 B1

*700*

701
702
703
+

704

3 NON−FUNCTIONAL
JET NOZZLES

3 REMAINING
JET NOZZLES

*FIG. 8*

FIG. 9

FIG. 10

*FIG. 11*

| | |
|---|---|
| *FIG. 11a* | *FIG. 11b* |
| *FIG. 11c* | *FIG. 11d* |
| *FIG. 11e* | *FIG. 11f* |

| Jet Mask # | Group # | Zone # |
|---|---|---|
| 1 | 1 | 1 |
| 2 | 2 | 1 |
| 3 | 3 | 1 |
| 4 | 4 | 1 |
| 5 | 5 | 1 |
| 6 | 6 | 1 |
| 7 | 7 | 1 |
| 8 | 8 | 1 |
| 9 | 9 | 1 |
| 10 | 10 | 1 |
| 11 | 11 | 1 |
| 12 | 12 | 1 |
| 13 | 13 | 1 |
| 14 | 14 | 1 |
| 15 | 15 | 1 |
| 16 | 16 | 1 |
| 17 | 17 | 1 |
| 18 | 1 | 2 |
| 19 | 2 | 2 |
| 20 | 3 | 2 |
| 21 | 4 | 2 |
| 22 | 5 | 2 |
| 23 | 6 | 2 |
| 24 | 7 | 2 |
| 25 | 8 | 2 |
| 26 | 9 | 2 |
| 27 | 10 | 2 |
| 28 | 11 | 2 |
| 29 | 12 | 2 |
| 30 | 13 | 2 |
| 31 | 14 | 2 |
| 32 | 15 | 2 |
| 33 | 16 | 2 |
| 34 | 17 | 2 |

*FIG. 11a*

*FIG. 11b*

FIG. 11c
FIG. 11d

| Jet Mask # | Group # | Zone # |
| --- | --- | --- |
| 35 | 1 | 3 |
| 36 | 2 | 3 |
| 37 | 3 | 3 |
| 38 | 4 | 3 |
| 39 | 5 | 3 |
| 40 | 6 | 3 |
| 41 | 7 | 3 |
| 42 | 8 | 3 |
| 43 | 9 | 3 |
| 44 | 10 | 3 |
| 45 | 11 | 3 |
| 46 | 12 | 3 |
| 47 | 13 | 3 |
| 48 | 14 | 3 |
| 49 | 15 | 3 |
| 50 | 16 | 3 |
| 51 | 17 | 3 |
| 52 | 1 | 1 |
| 53 | 2 | 1 |
| 54 | 3 | 1 |
| 55 | 4 | 1 |
| 56 | 5 | 1 |
| 57 | 6 | 1 |
| 58 | 7 | 1 |
| 59 | 8 | 1 |
| 60 | 9 | 1 |
| 61 | 10 | 1 |
| 62 | 11 | 1 |
| 63 | 12 | 1 |
| 64 | 13 | 1 |
| 65 | 14 | 1 |
| 66 | 15 | 1 |
| 67 | 16 | 1 |
| 68 | 17 | 1 |

EP 0 999 935 B1

Jet # / Mask # / Group # / Zone #

| Jet # | Mask # | Group # | Zone # |
|---|---|---|---|
| 69 | 1 | 2 | |
| 70 | 2 | 2 | |
| 71 | 3 | 2 | |
| 72 | 4 | 2 | |
| 73 | 5 | 2 | |
| 74 | 6 | 2 | |
| 75 | 7 | 2 | |
| 76 | 8 | 2 | |
| 77 | 9 | 2 | |
| 78 | 10 | 2 | |
| 79 | 11 | 2 | |
| 80 | 12 | 2 | |
| 81 | 13 | 2 | |
| 82 | 14 | 2 | |
| 83 | 15 | 2 | |
| 84 | 16 | 2 | |
| 85 | 17 | 2 | |
| 86 | 1 | 3 | |
| 87 | 2 | 3 | |
| 88 | 3 | 3 | |
| 89 | 4 | 3 | |
| 90 | 5 | 3 | |
| 91 | 6 | 3 | |
| 92 | 7 | 3 | |
| 93 | 8 | 3 | |
| 94 | 9 | 3 | |
| 95 | 10 | 3 | |
| 96 | 11 | 3 | |
| 97 | 12 | 3 | |
| 98 | 13 | 3 | |
| 99 | 14 | 3 | |
| 100 | 15 | 3 | |
| 101 | 16 | 3 | |
| 102 | 17 | 3 | |
| 103 | not used | | |
| 104 | not used | | |

*FIG. 11e*

*FIG. 11f*

38

FIG. 12

ZONE 1

ZONE 1+2

ZONE 1+2+3

ZONE 1+2+3+4

ZONE 1+2+3+
4+5

ZONE 1+2+3+
4+5+6

EP 0 999 935 B1

FIG. 13

FIG. 14

FIG. 15

**FIG. 16**

EP 0 999 935 B1

FIG. 17

FIG. 18

EP 0 999 935 B1